# EUROPÄISCHE PATENTSCHRIFT

(11) **EP 2 795 590 B1**
(45) Veröffentlichungstag und Bekanntmachung des Hinweises auf die Patenterteilung: **15.04.2020**
(21) Anmeldenummer: 12813767.6
(22) Anmeldetag: 19.12.2012
(51) Int. Cl.: G07D 7/08

(54) **VERFAHREN UND VORRICHTUNG ZUM PRÜFEN EINES WERTDOKUMENTES**
METHOD AND DEVICE FOR EXAMINING A DOCUMENT OF VALUE
MÉTHODE ET DISPOSITIF DE CONTRÔLE D'UN DOCUMENT DE VALEUR

(30) Priorität: 21.12.2011 DE 102011121913
(43) Veröffentlichungstag der Anmeldung: 29.10.2014
(73) Patentinhaber: Giesecke+Devrient Currency Technology GmbH, 81677 München (DE)
(72) Erfinder: DOMKE, Jan, 85591 Vaterstetten (DE); SCHOLZ, Ingo, 28355 Bremen (DE)
(86) Internationale Anmeldenummer: PCT/EP2012/005274
(87) Internationale Veröffentlichungsnummer: WO 2013/091857

(56) Entgegenhaltungen:
- WO-A1-2008/009384
- WO-A2-02/10716
- US-A1- 2010 060 881
- US-A1- 2010 243 729

## Beschreibung

Die vorliegende Erfindung betrifft ein Verfahren zum Prüfen eines Wertdokuments eines vorgegebenen Typs auf einen Verdacht für das Vorliegen einer Fälschung, insbesondere einer Stückelfälschung, und eine Einrichtung zur Durchführung des Verfahrens.

Unter Wertdokumenten werden dabei blattförmige Gegenstände verstanden, die beispielsweise einen monetären Wert oder eine Berechtigung repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugten Stelle, ist. Wichtige Beispiele für solche Wertdokumente sind Chipkarten, Coupons, Gutscheine, Schecks und insbesondere Banknoten. Die Wertdokumente können sich jeweils durch ihren Typ unterscheiden, beispielsweise im Fall von Banknoten durch die Denomination bzw. den Nennwert und die Währung oder im Fall von Schecks einen durch den Herausgeber der Schecks gegebenen Scheckformulartyp.

Es treten immer wieder Fälschungen von Wertdokumenten auf, die im Folgenden auch als Stückelfälschung bezeichnet werden. Diese können dadurch entstehen, daß ein abgetrennter Teil eines Wertdokuments eines gegebenen Typs - meist durch Kleben - mit einem Substratabschnitt, beispielsweise einem abgetrennten Teil eines Wertdokuments anderen Typs oder einem geeignet geformten Stück Papier, Folie usw., so verbunden wird, daß ein Gebilde entsteht, das in etwa die Dimensionen des Wertdokuments aufweist. Insbesondere kann beispielsweise ein Wertdokument in geschickter Weise in zwei Teile zerteilt werden, die dann jeweils mit einem geeigneten Substratabschnitt zusammengefügt werden. Hierdurch entstehen zwei Fälschungen des Wertdokuments, die je nach Ausführung der Fälschung mit einfachen Prüfvorrichtungen nur schwer zu erkennen sind. Ein Problem bei der maschinellen Prüfung solcher Wertdokumente liegt darin, daß die Klebeverbindung nicht einfach und zugleich sicher zu erkennen ist.

In US 2010/0243729 A1 ist ein Bankautomat beschrieben. Der Bankautomaten arbeitet, um Finanztransfers in Reaktion auf Daten enthaltende Sätze zu bewirken. Der Bankautomat enthält einen Kartenleser, der betreibbar ist, um Daten von Benutzerkarten zu lesen, die einem Finanzkonto entsprechen. Der Bankautomat umfaßt ferner eine Schein-Annahmevorrichtung, die betreibbar ist, um Banknoten und/oder Schecks anzunehmen. Eine Banknotenannahmeeinrichtung besitzt mindestens einen Prüfer, der mindestens einen Ultraschalldetektor beinhaltet. Der zumindest eine Prüfer dient dazu, fälschungsverdächtige Banknoten, die durch Zusammensetzen von Teilen echter Noten hergestellt worden sind, zu identifizieren, indem Nähte oder andere Befestigungsmerkmale der Noten, wo solche Teile miteinander verbunden sind, identifiziert werden. Der Notenprüfer kann ferner Bildsensoren und / oder Strahlungstransmissionssensoren aufweisen, die weiter verwendbar sind, um das Vorhandensein von Nähten oder anderen Befestigungsmerkmalen zu erkennen, die echte und fälschungsverdächtige Noten unterscheiden können.

WO 02/10716 A2 betrifft ein Verfahren zur Verifikation von Dickenmodulationen, insbesondere Wasserzeichen, in oder auf Blattgut. Zur Verminderung des Einflusses von Störungen aus der Umgebung sowie zur Reduktion des Justageaufwands bei der Fertigung und Wartung entsprechender Messsysteme wird das Blattgut mit Schall, insbesondere Ultraschall, beaufschlagt, der durch das Blattgut transmittierte und/oder am Blattgut reflektierte Schall an mehreren Stellen des Blattguts gemessen, für jede der Stellen mindestens ein für den transmittierten und/oder reflektierten Schall charakteristischer Wert erzeugt und die Dickenmodulationen durch Vergleich der Werte mit vorgegebenen Referenzwerten verifiziert.

Der vorliegenden Erfindung liegt daher die Aufgabe zugrunde, ein Verfahren zum Prüfen eines Wertdokuments eines vorgegebenen Typs auf einen Verdacht für das Vorliegen einer Fälschung, insbesondere einer Stückelfälschung, bereitzustellen, und eine Einrichtung zur Durchführung des Verfahrens zu schaffen.

Die Aufgabe wird gelöst durch ein Verfahren zum Prüfen eines Wertdokuments eines vorgegebenen Typs auf einen Verdacht für das Vorliegen einer Fälschung, insbesondere einer Stückelfälschung, mit den Merkmalen des Anspruchs 1, und insbesondere ein solches Verfahren, bei dem mittels eines Ultraschallsensors wenigstens eine Ultraschalleigenschaft des Wertdokuments ortsaufgelöst unter Bildung von ortsabhängigen Meßdaten erfaßt wird, bei dem mittels einer Auswerteeinrichtung unter Verwendung der ortsabhängigen Meßdaten, vorzugsweise mittels einer Auswerteeinrichtung, geprüft wird, ob in einem vorgegebenen Prüfbereich des Wertdokuments zwei Flächenbereiche vorhanden sind, so daß die wenigstens eine Ultraschalleigenschaft an Orten in einem ersten der beiden Flächenbereiche einen vorgegebenen ersten Verlauf aufweist und die wenigstens eine Ultraschalleigenschaft in dem ersten Flächenbereich und die wenigstens eine Ultraschalleigenschaft in dem anderen Flächenbereich gemäß einem vorgegebenen Unterschiedskriterium voneinander abweichen, und bei dem ein Echtheitssignal gebildet wird, das das Ergebnis der Prüfung wiedergibt.

Die Aufgabe wird weiter gelöst durch eine Einrichtung zur Prüfung von Wertdokumenten wenigstens eines vorgegebenen Typs mit den Merkmalen des Anspruchs 7, die zur Durchführung eines Verfahrens nach einem der vorhergehenden Ansprüche ausgebildet ist, und insbesondere vorzugsweise mit einem Ultraschallsensor, der dazu ausgebildet ist, wenigstens eine Ultraschalleigenschaft eines durch einen Erfassungsbereich des Ultraschallsensors hindurchtransportierten Wertdokuments ortsaufgelöst unter Bildung von ortsabhängigen Meßdaten zu erfassen, und einer Auswerteeinrichtung, die dazu ausgebildet ist, die Meßdaten des Ultraschallsensors zu erfassen und unter Verwendung der ortsabhängigen Meßdaten zu prüfen, ob in einem vorgegebenen Prüfbereich des Wertdokuments zwei Flächenbereiche vorhanden sind, so daß die wenigstens eine Ultraschalleigenschaft an Orten in einem ersten der beiden Flächenbereiche einen vorgegebenen ersten Verlauf aufweist und die wenigstens eine Ultraschalleigenschaft in dem ersten Flächenbereich und die wenigstens eine Ultraschalleigenschaft in dem anderen Flächenbereich gemäß einem vorgegebenen Unterschiedskriterium voneinander abweichen, und ein Echtheitssignal zu bilden, das das Ergebnis der Prüfung wiedergibt. Das Echtheitssignal kann abgegeben oder in der Auswerteeinrichtung, beispielsweise zu Speicherung eines entsprechenden Datenwertes, weiter verwendet werden.

Erfindungsgemäß wird das Wertdokument mit Ultraschall untersucht. Zur Erfassung der Ultraschalleigenschaften kann Ultraschall kontinuierlich oder vorzugsweise in Pulsen auf das Wertdokument abgegeben und der daraufhin von dem Wertdokument ausgehende Ultraschall erfaßt werden.

Unter Ultraschall wird im Rahmen der vorliegenden Erfindung Schall verstanden, der eine Frequenz größer als 20 kHz, vorzugsweise größer als 40 kHz aufweist. Besonders bevorzugt liegt die Frequenz des Ultraschalls unter 800 kHz. Werden Ultraschallpulse verwendet, so wird dabei unter der Frequenz der arithmetische Mittelwert über die Frequenzen des Pulses verstanden.

Die Ultraschalleigenschaften werden ortsaufgelöst ermittelt, d. h. die Ultraschalleigenschaften werden für verschiedene Meßbereiche des Wertdokuments ermittelt, wobei sich wenigstens einige der Meßbereiche berühren oder überlappen können. Für jeden der Meßbereiche und damit einen den jeweiligen Meßbereich repräsentierenden Ort auf dem Wertdokument kann ein die Ultraschalleigenschaften darstellender Meßwert gebildet werden, der weiterverarbeitet wird. Die bei der Messung gebildeten Meßdaten umfassen die Meßwerte für die Orte, für die die Meßwerte erfaßt wurden, und vorzugsweise jeweils zugeordnete Ortsinformationen, die sich aber auch aus der Anordnung der Meßwerte in einem Feld ergeben können.

Erfindungsgemäß wird geprüft, ob in einem vorgegebenen Prüfbereich des Wertdokuments zwei Flächenbereiche vorhanden sind, die unterschiedliche Ultraschalleigenschaften aufweisen. Unter einem Flächenbereich des Wertdokuments wird im Rahmen der vorliegenden Erfindung ein zusammenhängender Bereich des Wertdokuments verstanden.

Der Prüfbereich des Wertdokuments ist dabei in Abhängigkeit vom dem vorgegebenen Typ des Wertdokuments vorgegeben und kann, je nach Typ, das gesamte Wertdokument oder auch nur einen Teil desselben umfassen.

Es wird nun geprüft, ob die beiden Flächenbereiche vorhanden sind.

Der erste der beiden Flächenbereiche zeichnet sich dadurch aus, daß die wenigstens eine Ultraschalleigenschaft an Orten in dem Flächenbereiche einen vorgegebenen ersten Verlauf aufweist. Unter dem Verlauf der Ultraschalleigenschaft wird im Rahmen der vorliegenden Erfindung die Variation der Ultraschalleigenschaft in dem Flächenbereich oder deren Abwesenheit verstanden. Der erste Verlauf kann dabei vorzugsweise in Abhängigkeit von dem Typ des Wertdokuments und gegebenenfalls der Lage bei der Erfassung der Ultraschalleigenschaft vorgegeben sein. Da die Meßdaten die Ultraschalleigenschaft darstellen, entspricht dem Verlauf der Ultraschalleigenschaft ein Verlauf der Meßdaten, unter dem in entsprechender Weise die Variation der Meßdaten über dem Flächenbereich oder die Abwesenheit der Variation verstanden wird. Darunter, daß die Ultraschalleigenschaft an den Orten in dem ersten Flächenbereich den vorgegebenen ersten Verlauf aufweist, wird verstanden, daß die durch die Meßdaten gegebenen Meßwerte bzw. der durch diese gegebene gemessene Verlauf bis auf Schwankungen in einem vorgegebenen Toleranzbereich dem vorgegebenen ersten Verlauf entsprechen. Die Größe des Toleranzbereichs kann insbesondere in Abhängigkeit von den Eigenschaften des zur Erfassung verwendeten Ultraschallsensors und den herstellungsbedingten Schwankungen der Eigenschaften der Wertdokumente, die die Ultraschalleigenschaft bestimmen, gewählt sein. Der erste Flächenbereich kann insbesondere durch einen Abschnitt des Wertdokuments gegeben sein, an oder in das ein Stück eines anderen Dokuments oder Blatts gesetzt wurde.

Der andere Flächenbereich ergibt sich dadurch, daß er in dem Prüfbereich liegt und die wenigstens eine Ultraschalleigenschaft in dem ersten Flächenbereich und die wenigstens eine Ultraschalleigenschaft in dem anderen Flächenbereich gemäß einem vorgegebenen Unterschiedskriterium voneinander abweichen. Das Unterschiedskriterium kann dabei in Abhängigkeit von der der Art der Ultraschalleigenschaft und/oder dem Typ des Wertdokuments und/oder dem vorgegebenen ersten Verlauf vorgegeben sein.

Ist das Unterschiedskriterium erfüllt, wird dies als ein Hinweis auf eine Stückelfälschung angesehen und die Auswerteeinrichtung bildet ein entsprechendes Echtheitssignal. Das Echtheitssignal kann abgegeben oder zur Speicherung eines Datenwertes in der Auswerteeinrichtung zur späteren Verwendung bei einer Echtheitsprüfung verwendet werden.

Die Erfindung zeichnet sich insbesondere dadurch aus, daß nicht die Verbindung der Teile des zusammengesetzten Wertdokuments, also beispielsweise eine Klebeverbindung, erkannt zu werden braucht. Vielmehr wird ausgenutzt, daß sich die verschiedenen Teile durch ihre Ultraschalleigenschaften unterscheiden.

Die erfindungsgemäße Einrichtung kann insbesondere zur Durchführung des erfindungsgemäßen Verfahrens ausgebildet sein. Die Auswerteeinrichtung kann insbesondere zum Durchführen des Prüfens einen Prozessor, beispielsweise einen Mikrocontroller oder einen digitalen Signalprozessor, und/oder ein FPGA sowie einen Speicher enthalten. In dem Speicher können insbesondere Instruktionen eines Computerprogramms gespeichert sein, bei deren Ausführung durch den Prozessor Verfahrensschritte des erfindungsgemäßen Verfahrens nach der Erfassung der Meßdaten ausgeführt werden.

Als Ultraschalleigenschaft können prinzipiell beliebige geeignete Eigenschaften verwendet werden, die die Wechselwirkung des Wertdokuments mit Ultraschall charakterisieren. Vorzugsweise kann Ultraschall in einem vorgegebenen Frequenzbereich, besonders bevorzugt im Bereich zwischen 40 kHz und 800 kHz, ganz besonders bevorzugt im Bereich zwischen 100 kHz und 450 kHz verwendet werden, wozu die als Sender und Empfänger dienenden Ultraschallwandler entsprechend ausgebildet sein können.

Gemäß einer bevorzugten Ausführungsform kann als Ultraschalleigenschaft die Transmission bzw. das Transmissionsvermögen für Ultraschall in dem vorgegebenen Frequenzbereich verwendet werden. Dann kann zum Ermitteln der wenigstens einen Ultraschalleigenschaft Ultraschall auf das Wertdokument abgegeben und der von dem Wertdokument transmittierte Ultraschall erfaßt werden. Dazu kann bei der Einrichtung der Ultraschallsensor dazu ausgebildet sein, Ultraschall auf das Wertdokument abzugeben und von dem Wertdokument transmittierten Ultraschall zu erfassen. Als Transmission kann dabei die Intensität des transmittierten Ultraschalls oder die Intensität des transmittierten Ultraschalls normiert mit der Intensität des auf das Wertdokument fallenden Ultraschalls oder ein dazu proportionaler Wert verwendet werden. Es hat sich gezeigt, daß sich Ultraschalltransmissionseigenschaften besonders gut zur Untersuchung von Wertdokumenten eignen, da sie robuste Messungen erlauben.

Gemäß einer anderen Ausführungsform ist es aber alternativ oder zusätzlich möglich, als Ultraschalleigenschaft die Remission bzw. das Remissionsvermögen für Ultraschall in dem vorgegebenen Frequenzbereich zu verwenden. Bei dem Verfahren kann dann zum Ermitteln der wenigstens einen Ultraschalleigenschaft Ultraschall in dem vorgegebenen Frequenzbereich auf das Wertdokument abgegeben und der von dem Wertdokument remittierte Ultraschall erfaßt werden. Bei der Einrichtung kann dazu der Ultraschallsensor vorzugsweise dazu ausgebildet sein, Ultraschall in dem vorgegebenen Frequenzbereich auf das Wertdokument abzugeben und von dem Wertdokument remittierten Ultraschall zu erfassen. Als Remission kann dabei die Intensität des remittierten Ultraschalls oder die Intensität des remittierten Ultraschalls normiert mit der Intensität des auf das Wertdokument fallenden Ultraschalls oder ein dazu proportionaler Wert verwendet werden.

Es ist aber beispielsweise auch möglich, als Ultraschalleigenschaft eine Phasenänderung bei Remission oder Transmission zu erfassen.

Das Ermitteln der Flächenbereiche kann prinzipiell beliebig erfolgen. Die Art der Ermittlung kann insbesondere in Abhängigkeit von dem vorgegebenen ersten Verlauf gewählt sein. So können der Ermittlung der Flächenbereiche zunächst zusammenhängende Linienbereiche in Transportrichtung oder quer zur Transportrichtung, d. h. unmittelbar benachbarte Orte auf einer Geraden in Transportrichtung bzw. quer zur Transportrichtung ermittelt werden, entlang derer die Ultraschalleigenschaften einen dem vorgegebenen ersten Verlauf entsprechenden Verlauf aufweisen. Danach kann dann auf dieser Basis nach den Flächenbereichen gesucht werden. Es ist aber auch möglich, daß die Meßwerte entsprechend den Orten als Feld angesehen werden und in diesem Feld nach zusammenhängenden Bereichen gesucht wird. Dieses Verfahren ist besonders bevorzugt, wenn der vorgegebene Verlauf ein Muster darstellt, das eine systematische örtliche Variation der Ultraschalleigenschaft vorsieht.

Gemäß der Erfindung können bei dem Prüfen, ob in dem vorgegebenen Prüfbereich des Wertdokuments die zwei Flächenbereiche vorhanden sind, Mittelwerte über die Meßdaten über wenigstens drei benachbarte Orte gebildet und zur Ermittlung des Verlaufs in dem ersten Flächenbereich und/oder bei der Prüfung des Unterscheidungskriteriums verwendet werden. Bei der Einrichtung kann dazu die Auswerteeinrichtung vorzugsweise weiter dazu ausgebildet sein, daß bei dem Prüfen, ob in dem vorgegebenen Prüfbereich des Wertdokuments die zwei Flächenbereiche vorhanden sind, Mittelwerte über die Meßdaten über wenigstens drei benachbarte Orte gebildet und zur Ermittlung des Verlaufs in dem ersten Flächenbereich und/oder bei der Prüfung des Unterscheidungskriteriums verwendet werden. Diese Ausführungsform hat den Vorteil, daß gebrauchsbedingte Schwankungen in der wenigstens einen Ultraschalleigenschaft des Wertdokuments oder Rauscheinflüsse des zur Erfassung der Ultraschalleigenschaft verwendeten Ultraschallsensors die Prüfung nicht oder nur gering negativ beeinflussen können. Insbesondere kann dabei für jeden der Meßwerte für einen jeweiligen Ort in dem Prüfbereich der jeweilige Meßwert durch den Mittelwert über den Meßwert für den jeweiligen Ort und wenigstens zwei benachbarte Orte ersetzt werden.

Der erste Verlauf kann in Abhängigkeit von dem Typ des Wertdokuments und vorzugsweise auch des Prüfbereichs vorgegeben sein. Beispielsweise kann der erste vorgegebene Verlauf derart sein, daß in dem ersten Flächenbereich gemäß einem vorgegebenen Kriterium die wenigstens eine Ultraschalleigenschaft ortsunabhängig ist bzw. daß die Meßwerte ortsunabhängig sind. Sie zeigen dann einen ortsunabhängigen Verlauf. Bei der Einrichtung kann dazu die Auswerteeinrichtung so ausgebildet sein, daß der erste vorgegebene Verlauf derart ist, daß in dem ersten Flächenbereich gemäß einem vorgegebenen Kriterium die wenigstens eine Ultraschalleigenschaft ortsunabhängig ist bzw. daß die Meßwerte ortsunabhängig sind. Dies kann beispielsweise bei Wertdokumenten in Form von Banknoten der Fall sein, wenn der Prüfbereich kein Wasserzeichen aufweist, sondern nur einfaches Banknotensubstrat ohne weitere Elemente aufweist. In diesem Fall ist die Prüfung auf das Vorliegen der Flächenbereiche besonders einfach durchzuführen. Das Kriterium kann beispielsweise so gewählt sein, daß zufällige Schwankungen in den Meßdaten oder den Eigenschaften des Wertdokuments eine nur sehr kleine oder keine Rolle spielen. So kann der erste Verlauf beispielsweise so definiert sein, daß die Variation der Meßdaten bzw. die Meßwerte um ihren Mittelwert oder einen für den Wertdokumenttyp vorgegebenen Wert innerhalb eines vorgegebenen Intervalls liegen muß bzw. müssen. Die Breite des Intervalls kann unter anderem in Abhängigkeit von den genannten zufälligen Einflüssen gewählt sein. Weiter kann das Intervall in Abhängigkeit von dem Typ des Wertdokuments und vorzugsweise auch dem verwendeten Ultraschallsensor gewählt sein. Werden die Meßdaten vor der Auswertung vorverarbeitet und/oder gemittelt und/oder gefiltert, wird dieser Umstand vorzugsweise bei der Festlegung des Intervalls berücksichtigt.

Es ist aber beispielsweise auch möglich, daß der erste vorgegebene Verlauf ein für den Typ des Wertdokuments vorgegebenes örtliches Muster der wenigstens einen Ultraschalleigenschaft darstellt. Bei der Einrichtung kann hierzu die Auswerteeinrichtung so ausgebildet sein, daß der erste vorgegebene Verlauf ein für den Typ des Wertdokuments vorgegebenes örtliches Muster der wenigstens einen Ultraschalleigenschaft darstellt. Bei diesem Muster kann es sich vorzugsweise um ein sich über den gesamten Prüfbereich erstreckendes Wasserzeichen handeln, das vorzugsweise periodisch ist.

Das Unterschiedskriterium kann verschiedene Eigenschaften des Wertdokuments betreffen, ist aber vorzugsweise in Abhängigkeit von dem vorgegebenen ersten Verlauf gewählt. Jedes der im Folgenden genannten Teilkriterien kann als einziges Teilkriterium des Unterscheidungskriteriums verwendet werden, es ist aber in anderen Ausführungsformen auch möglich, daß das Unterscheidungskriterium die Teilkriterien als Alternativen oder kumulativ umfaßt.

So kann bei einer bevorzugten Variante, bei der der erste vorgegebene Verlauf derart ist, daß in dem ersten Flächenbereich gemäß einem vorgegebenen Kriterium die wenigstens eine Ultraschalleigenschaft ortsunabhängig ist bzw. daß die die wenigstens einen Ultraschalleigenschaft darstellenden Meßwerte in den Meßdaten ortsunabhängig sind, das Unterschiedskriterium das Teilkriterium enthalten, ob sich den Meßdaten entsprechende Flächengewichte der Flächenbereiche oder durch die Meßdaten dargestellte Flächengewichte der Flächenbereiche um wenigstens 5 g/m², vorzugsweise 10 g/m² unterscheiden. Bei der Einrichtung kann dazu vorzugsweise die Auswerteeinrichtung so ausgebildet sein, daß der erste vorgegebene Verlauf derart ist, daß in dem ersten Flächenbereich gemäß einem vorgegebenen Kriterium die wenigstens eine Ultraschalleigenschaft ortsunabhängig ist bzw. daß die wenigstens einen Ultraschalleigenschaft darstellenden Meßwerte in den Meßdaten ortsunabhängig sind und daß das Unterschiedskriterium das Teilkriterium enthält, ob sich den Meßdaten entsprechende Flächengewichte der Flächenbereiche oder durch die Meßdaten festgelegte Flächengewichte der Flächenbereiche um wenigstens 5 g/m², vorzugsweise 10 g/m² unterscheiden. Unter dem Begriff "Flächengewichte der Flächenbereiche" werden dabei zum einen verschiedene Flächengewichtswerte bzw. entsprechende Meßwerte oder aus diesen ermittelte Werte verstanden, die Orten in den jeweiligen Flächenbereichen entsprechen. Zum anderen werden unter dem Begriff auch aus den Meßdaten ermittelte Werte verstanden, die das Flächengewicht der jeweiligen Flächenbereiche darstellen. Durch Verwendung dieses Teilkriteriums lassen sich insbesondere Stückelfälschungen erkennen, bei denen Teile des Wertdokuments durch leichter verfügbare Papierabschnitte, beispielsweise aus käuflichem Kopier- oder Druckerpapier, ersetzt sind. Weiter ist es möglich, Stückelfälschungen bei Wertdokumentsystemen zu erkennen, die verschiedene Wertdokumenttypen aus Trägermaterialien, beispielsweise Papier oder Kunststofffolien, mit jeweils für den Wertdokumenttyp vorgegebenen, unterschiedlichen Flächengewichten aufweisen. Es können dann nicht mehr Teile eines Wertdokuments niedrigeren Werts dazu verwendet werden, Teile eines Wertdokuments höheren Werts zu ersetzen. Beschrieben ist daher auch ein System von Wertdokumenten, das wenigstens zwei verschiedene Wertdokumenttypen umfaßt, die jeweils durch ein für den jeweiligen Wertdokumenttyp spezifisches Trägermaterial, vorzugsweise Banknotenpapier und/oder Kunststofffoliensubstrate für Banknoten und/oder Verbundmaterialien aus Papier und Folien, mit einem. für den jeweiligen Wertdokumenttyp spezifischen Flächengewicht aufweisen, wobei sich die Flächengewichte für wenigstens verschiedene Wertdokumenttypen unterscheiden. Vorzugsweise beträgt der Unterschied der Flächengewichte wenigstens 5 g/m², besonders bevorzugt wenigstens 10 g/m². Das Trägermaterial kann dabei Fensterbereiche oder Merkmalbereiche aufweisen, in oder auf denen sich Folien oder Sicherheitsmerkmale oder Wasserzeichen oder ähnliches befinden; diese Bereiche werden bei der Ermittlung des Flächengewichts nicht berücksichtigt, d.h. der Prüfbereich ist so gewählt, daß diese Merkmale nicht im Prüfbereich liegen.

Gemäß einer anderen bevorzugten Variante, bei der der erste vorgegebene Verlauf ein für den Typ des Wertdokuments vorgegebenes örtliches Muster der wenigstens einen Ultraschalleigenschaft darstellt, kann das Unterschiedskriterium das Teilkriterium enthalten, ob die Meßdaten für den anderen der Flächenbereiche ein abweichendes oder kein örtliches Muster der wenigstens einen Ultraschalleigenschaft darstellen. Bei der Einrichtung kann dazu die Auswerteeinrichtung vorzugsweise so ausgebildet sein, daß das Unterschiedskriterium das Teilkriterium enthält, ob die Meßdaten für einen der Flächenbereiche ein für den Typ von Wertdokument vorgegebenes örtliches Muster der wenigstens einen Ultraschalleigenschaft darstellen und ob die Meßdaten für den anderen der Flächenbereiche ein abweichendes oder kein örtliches Muster der wenigstens einen Ultraschalleigenschaft darstellen. Vorzugsweise kann als Muster ein sich über das gesamte Wertdokument ausgebildetes Wasserzeichen verwendet werden. Darunter, daß das eine Muster von dem anderen Muster abweicht, wird auch verstanden, daß eine Abweichung vorliegt, wenn die beiden Muster in einer für den Wertdokumenttyp unzulässigen Weise gegeneinander versetzt sind, wie es beispielsweise bei einem sich streifenförmig über das gesamte Wertdokument erstreckende, periodisch ausgebildeten Wasserzeichen auftreten kann.

Um die Erkennungssicherheit zu erhöhen, kann bei dem Verfahren das Prüfen vorzugsweise weiter beinhalten, daß geprüft wird, ob die Flächenbereiche durch eine durchgehenden Kurve oder Linie von einem ersten Randabschnitt des Wertdokuments zu einem zweiten Randabschnitt des Wertdokuments getrennt werden, d. h. auf sich gegenüberliegenden Seiten der Kurve bzw. Linie liegen. Bei der Einrichtung kann hierzu die Auswerteeinrichtung entsprechend ausgebildet sein. Das Vorhandensein solcher Flächenbereiche weist besonders stark auf das Vorliegen einer Stückelfälschung hin. Das Unterschiedskriterium kann prinzipiell beliebig, aber geeignet gewählt sein. Es kann vorzugsweise in Abhängigkeit von den Eigenschaften des zur Untersuchung verwendeten Ultraschallsensors und dem Typ des zu untersuchenden Wertdokuments gewählt werden.

Weiter ist es bevorzugt, daß bei der Prüfung, ob die zwei Flächenbereiche vorhanden sind, nur Flächenbereiche berücksichtigt werden, deren Flächeninhalte einen vorgegebenen Mindestflächeninhalt übersteigen. Dieser Mindestflächeninhalt kann vorzugsweise in Abhängigkeit von dem vorgegeben Typ des Wertdokuments, besonders bevorzugt den Sicherheitsmerkmalen des Wertdokuments, vorgegeben sein. Bei der Einrichtung kann dazu die Auswerteeinrichtung weiter dazu ausgebildet sein, daß bei der Prüfung, ob die zwei Flächenbereiche vorhanden sind, nur Flächenbereiche berücksichtigt werden, deren Flächeninhalte einen vorgegebenen Mindestflächeninhalt übersteigen. Der Mindestflächeninhalt kann beispielsweise in Abhängigkeit davon vorgegeben werden, wie groß Sicherheitsmerkmale oder Wertdokumentabschnitte auf einem echten Wertdokument des vorgegebenen Typs sind, die typischerweise bei einer Stückelfälschung ersetzt werden. Alternativ oder zusätzlich ist es bei dem Verfahren möglich, daß das Wertdokument einen umlaufenden Rand aufweist, und daß bei dem Verfahren bei dem Prüfen, ob die zwei Flächenbereiche vorhanden sind, nur Flächenbereiche berücksichtigt werden, die durch Abschnitte des Randes begrenzt sind, die nicht kollinear verlaufen. Dazu kann bei der Einrichtung die Auswerteeinrichtung so ausgebildet sein, daß bei der Prüfung, ob die zwei Flächenbereiche vorhanden sind, nur Flächenbereiche berücksichtigt werden, die durch Abschnitte eines umlaufenden Randes des Wertdokuments begrenzt sind, die nicht kollinear verlaufen. Unter kollinearen Abschnitten des Randes werden dabei Abschnitte verstanden, die auf einer Geraden liegen. Sich gegenüberliegende Abschnitte des Randes oder aneinander an einer Ecke aneinandergrenzende Abschnitte des Randes eines rechteckigen Wertdokuments sind beispielsweise nicht kollinear.

Weiter kann es bei dem Verfahren vorzugsweise vorgesehen sein, daß das Verfahren zum Prüfen von Wertdokumenten wenigstens zweier verschiedener vorgegebener Wertdokumenttypen ausgelegt ist, und ein Wertdokumenttyp des Wertdokuments ermittelt wird und der Prüfbereich in Abhängigkeit von dem ermittelten Wertdokumenttyp festgelegt wird. Bei der Einrichtung kann dazu die Auswerteeinrichtung so ausgebildet sein, daß der Prüfbereich in Abhängigkeit von einem ermittelten Typ des Wertdokuments festgelegt wird. Zur Ermittlung des Typs des Wertdokuments können insbesondere auch Daten wenigstens einer anderen physikalischen Eigenschaft des Wertdokuments, beispielsweise optische Eigenschaften bzw. die Dimensionen des Wertdokuments verwendet werden, die mit geeigneten Sensoren, beispielsweise wenigstens einem optischen Sensor erfaßt werden können.

Weiterer Gegenstand der Erfindung ist ein Verfahren zum Bearbeiten von Wertdokumenten unter Verwendung einer Wertdokumentbearbeitungseinrichtung, die einen Transportpfad mit wenigstens zwei Transportzweigen aufweist, bei dem ein Wertdokument mit einem Prüfverfahren nach einem der vorhergehenden Ansprüche geprüft und in Abhängigkeit von dem bei der Prüfung gebildeten Echtheitssignals einem der Transportzweige zugeführt wird. Weiterer Gegenstand der Erfindung ist eine Vorrichtung zur Bearbeitung von Wertdokumenten, vorzugsweise Sortierung von Wertdokumenten, mit einer Zuführeinrichtung für zu bearbeitende Wertdokumente, einer Ausgabeeinrichtung für Wertdokumente, wenigstens zwei Ausgabeabschnitten zur Aufnahme bearbeiteter Wertdokumente aufweist, einer Transporteinrichtung zum Transportieren von vereinzelten Wertdokumenten von der Zuführeinrichtung entlang eines Transportpfades zu der Ausgabeeinrichtung, einer erfindungsgemäßen Prüfungseinrichtung, die so angeordnet ist, daß der Transportpfad durch deren Erfassungsbereich verläuft, und einer Steuereinrichtung, die in Abhängigkeit von einem Echtheitssignals der Prüfvorrichtung für ein von der Transporteinrichtung transportiertes Wertdokument die Transporteinrichtung so ansteuert, daß das Wertdokument in einen, dem Echtheitssignal entsprechenden Ausgabeabschnitt der zwei Ausgabeabschnitte transportiert wird. Insbesondere kann gemäß einer bevorzugten Variante das Wertdokument nur dann einem Ausgabeabschnitt für als echt angesehene Wertdokumente zugeführt werden, wenn das Echtheitssignal fehlt oder keinen Hinweis auf eine Fälschung darstellt.

Bei der Vorrichtung ist es bevorzugt, daß diese einen Sensor, der so angeordnet ist, daß er durch den Sensor bestimmte Eigenschaften eines mittels der Transporteinrichtung transportierten Wertdokuments erfassen und diese darstellende Meßdaten bilden kann, und eine Ermittlungseinrichtung, die in Abhängigkeit von den Meßdaten einen Typ des Wertdokuments ermittelt und ein den Typ darstellendes Typsignal bildet, aufweist. Dann kann die Auswerteeinrichtung der Prüfeinrichtung so ausgebildet sein, daß sie Meßdaten des Ultraschallsensors in Abhängigkeit von dem Typsignal der Ermittlungseinrichtung für Bereiche außerhalb des in Abhängigkeit von dem Typ des Wertdokuments vorgegebenen Prüfbereichs des Wertdokuments bei der Prüfung nicht berücksichtigt.

Die Erfindung wird im Folgenden noch weiter beispielhaft an Hand der Zeichnungen erläutert. Es zeigen:
- Fig. 1: eine schematische Darstellung einer Banknotenbearbeitungsvorrichtung,
- Fig. 2: eine schematische Darstellung eines Ultraschallsensors der Banknotenbearbeitungsvorrichtung in Fig. 1 mit einer Steuer- und Auswerteeinrichtung in einer Ansicht entlang einer Transportrichtung von Banknoten,
- Fig. 3: eine schematische Darstellung von Ultraschallsendern des Ultraschallsensors in Fig. 2 in einer Ebene parallel zur Ebene einer zu untersuchenden Banknote,
- Fig. 4: eine schematische teilweise Darstellung einer Banknote mit durch die Ultraschallsender des Ultraschallsensors in Fig. 2 beschallten Flecken bzw. Abtastbereichen,
- Fig. 5: eine schematische Darstellung einer Banknote mit Orten bzw. Abtastbereichen, für die 'Transmissionswerte mittels des Ultraschallsensors in Fig. 3 ermittelt wurden,
- Fig. 6: schematische Darstellungen einer echten Banknote (a) und von Stückelfälschungen (b-d),
- Fig. 7: schematische Darstellungen einer echten Banknote (a) mit einem großflächigen periodischen Wasserzeichen und von Stückelfälschungen (b und c),
- Fig. 8: ein vereinfachtes Ablaufdiagramm für ein Beispiel eines Verfahrens zum Prüfen eines Wertdokuments eines vorgegebenen Typs auf einen Verdacht für das Vorliegen einer Fälschung, insbesondere einer Stückelfälschung, und

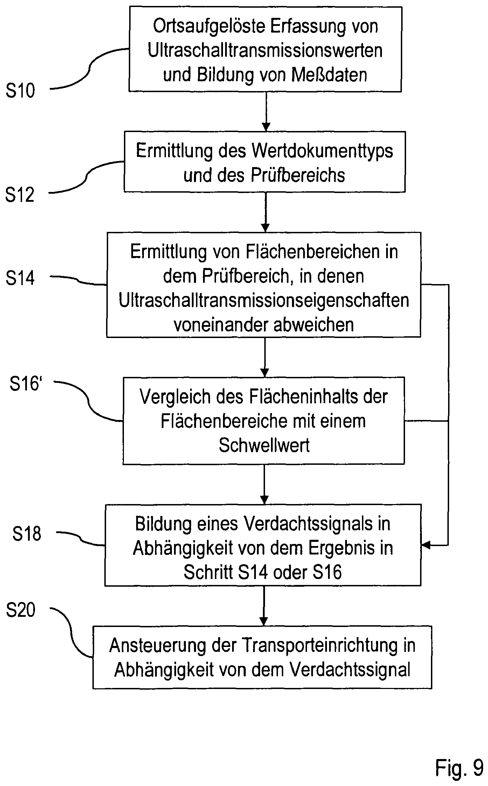

- Fig. 9: ein vereinfachtes Ablaufdiagramm für ein weiteres Beispiel eines Verfahrens zum Prüfen eines Wertdokuments eines vorgegebenen Typs auf einen Verdacht für das Vorliegen einer Fälschung, insbesondere einer Stückelfälschung.

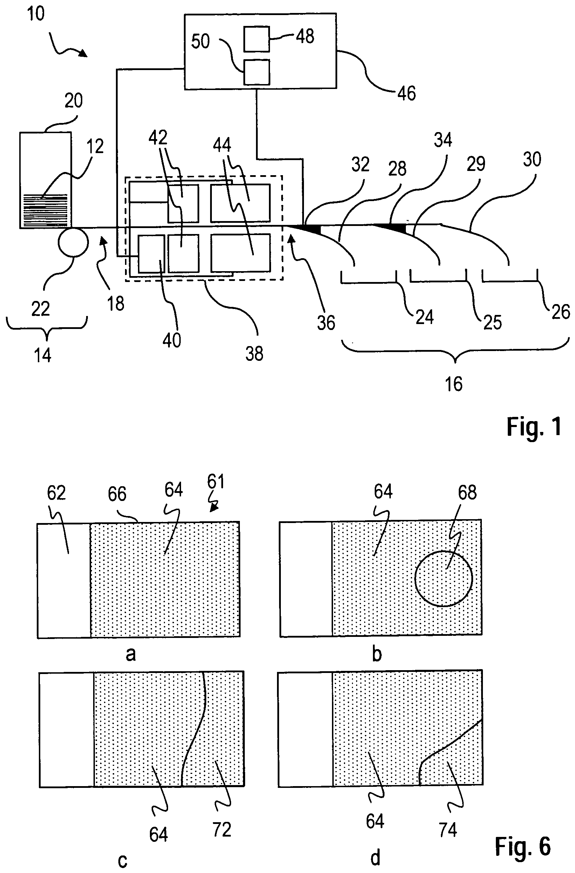

Eine Wertdokumentbearbeitungsvorrichtung 10 in Fig. 1, im Beispiel eine Vorrichtung zur Bearbeitung von Wertdokumenten 12 in Form von Banknoten, ist zur Sortierung von Wertdokumenten in Abhängigkeit von der Erkennung der Echtheit von bearbeiteten Wertdokumenten ausgebildet.

Sie verfügt über eine Zuführeinrichtung 14 zur Zuführung von Wertdokumenten, eine Ausgabeeinrichtung 16 zur Aufnahme bearbeiteter, d. h. sortierter Wertdokumente, und eine Transporteinrichtung 18 zum Transportieren von vereinzelten Wertdokumenten von der Zuführeinrichtung 14 zu der Ausgabeeinrichtung 16.

Die Zuführeinrichtung 14 umfaßt im Beispiel ein Eingabefach 20 für einen Wertdokumentstapel und einen Vereinzeler 22 zur Vereinzelung von Wertdokumenten aus dem Wertdokumentstapel in dem Eingabefach 20.

Die Ausgabeeinrichtung 16 umfaßt im Beispiel drei Ausgabeabschnitte 24, 25 und 26, in die bearbeitete Wertdokumente je nach dem Ergebnis der Bearbeitung sortiert werden können. Im Beispiel umfaßt jeder der Abschnitte ein Stapelfach und ein nicht gezeigtes Stapelrad, mittels dessen zugeführte Wertdokumente in dem Stapelfach abgelegt werden können.

Die Transporteinrichtung 18 verfügt über wenigstens zwei, im Beispiel drei Zweige 28, 29 und 30, an deren Enden jeweils einer der Ausgabeabschnitte 24 bzw. 25 bzw. 26 angeordnet ist, und an den Verzweigungen über durch Stellsignale steuerbare Weichen 32 und 34, mittels derer Wertdokumente in Abhängigkeit von Stellsignalen den Zweigen 28 bis 30 und damit den Ausgabeabschnitten 24 bis 26 zuführbar sind.

An einem durch die Transporteinrichtung 18 definierten Transportpfad 36 zwischen der Zuführeinrichtung 14, im Beispiel genauer dem Vereinzeler 22, und der in Transportrichtung ersten Weiche 32 nach dem Vereinzeler 22 ist eine Sensoreinrichtung 38 angeordnet, die während des Vorbeitransports von Wertdokumenten physikalische Eigenschaften der Wertdokumente mißt und die Meßergebnisse wiedergebende Sensorsignale bildet. In diesem Beispiel verfügt die Sensoreinrichtung 38 über drei Sensoren, nämlich einen optischen Remissionssensor 40, der ein Remissionsfarbbild des Wertdokuments erfaßt, einen optischen Transmissionssensor 42, der ein Transmissionsbild des Wertdokuments erfaßt, und einen Transmissionsultraschallsensor 44, der ortsaufgelöst Ultraschalltransmissionseigenschaften des Wertdokuments erfaßt bzw. mißt.

Eine Steuer- und Auswerteeinrichtung 46 ist über Signalverbindungen mit der Sensoreinrichtung 38 und der Transporteinrichtung 18, insbesondere den Weichen 32 und 34, verbunden. In Verbindung mit der Sensoreinrichtung 38 klassifiziert sie in Abhängigkeit von den Sensorsignalen der Sensoreinrichtung 38 für ein Wertdokument in eine von vorgegebenen Echtheitsklassen und steuert durch Abgabe von Stellsignalen die Transporteinrichtung 18, hier genauer die Weichen 32 bzw. 34 so an, daß das Wertdokument entsprechend seiner bei der Klassifizierung ermittelten Klasse in einen der Klasse zugeordneten Ausgabeabschnitt der Ausgabeeinrichtung 16 ausgegeben wird. Die Zuordnung zu einer der vorgegebenen Echtheitsklassen bzw. die Klassifizierung erfolgt dabei in Abhängigkeit von wenigstens einem vorgegebenen Echtheitskriterium.

Die Steuer- und Auswerteeinrichtung 46 verfügt dazu insbesondere neben entsprechenden Schnittstellen für die Sensoreinrichtung 38 bzw. deren Sensoren über einen Prozessor 48 und einen mit dem Prozessor 48 verbundenen Speicher 50, in dem wenigstens ein Computerprogramm mit Programmcode gespeichert ist, bei dessen Ausführung der Prozessor 48 die Vorrichtung steuert bzw. die Sensorsignale, insbesondere zur Ermittlung einer Echtheitsklasse eines bearbeiteten Wertdokuments, auswertet und entsprechend der Auswertung die Transporteinrichtung 18 ansteuert.

Genauer erfassen die Sensoren während des Vorbeitransports des Wertdokuments entsprechend ihrer Funktion Abtastbereichseigenschaften von durch die Relativlage der Sensoren zu der Banknote bestimmten Abtastbereichen auf der Banknote, wobei die entsprechenden Sensorsignale gebildet werden. Jeder der Sensoren kann dabei eine andere räumliche Auflösung aufweisen, d.h. die Größe und Verteilung der erfaßten Abtastbereiche auf der Banknote kann in Abhängigkeit von dem jeweiligen Sensor und der verwendeten Transportgeschwindigkeit variieren. Jedem der Abtastbereiche ist dabei ein Ort zugeordnet, der die Lage der Abtastbereiche für den jeweiligen Sensor zueinander und/oder relativ zu der Banknote wiedergibt.

Die Steuer- und Auswerteeinrichtung 46 ermittelt dann aus den analogen oder digitalen Sensorsignalen der Sensoren der Sensoreinrichtung 38 bei einer Sensorsignalauswertung wenigstens eine Abtastbereichseigenschaft und/oder wenigstens eine Wertdokumenteigenschaft, die für die Überprüfung der Banknoten in Bezug auf deren Echtheit relevant ist. Vorzugsweise werden mehrere dieser Eigenschaften ermittelt. In diesem Beispiel werden als optische Abtasteigenschaften ein Transmissionsbild und ein Remissionsbild und als akustische Eigenschaft die Ultraschalltransmission der Abtastbereiche ermittelt.

In Abhängigkeit von den Abtastbereichseigenschaften ermittelt die Steuer- und Auswerteeinrichtung 46 für die verschiedenen Sensoren jeweils Echtheitssignale, die darstellen, ob die ermittelten Abtastbereichs- bzw. Wertdokumenteigenschaften einen Hinweis auf die Echtheit des Wertdokuments darstellen oder nicht. In Folge dieser Signale können entsprechende Daten in der Steuer- und Auswerteeinrichtung 46, beispielsweise dem Speicher 50, zur späteren Verwendung gespeichert werden. In Abhängigkeit von den Echtheitssignalen ermittelt die Steuer- und Auswerteeinrichtung 46 dann ein Gesamtergebnis für die Echtheitsprüfung gemäß einem vorgegebenen Gesamtkriterium und bildet in Abhängigkeit von dem Ergebnis das Steuersignal für die Transporteinrichtung 18.

Zur Bearbeitung von Wertdokumenten 12 werden in das Eingabefach 20 als Stapel oder einzeln eingelegte Wertdokumente 12 von dem Vereinzeler 22 vereinzelt und vereinzelt der Transporteinrichtung 18 zugeführt, die die vereinzelten Wertdokumente 12 an der Sensoreinrichtung 38 vorbeitransportiert. Diese erfaßt die Eigenschaften der Wertdokumente 12, wobei Sensorsignale gebildet werden, die die Eigenschaften des jeweiligen Wertdokuments wiedergeben. Die Steuer- und Auswerteeinrichtung 46 erfaßt die Sensorsignale, ermittelt in Abhängigkeit von diesen eine Echtheitsklasse des jeweiligen Wertdokuments und steuert in Abhängigkeit von dem Ergebnis die Weichen so an, daß die Wertdokumente entsprechend der ermittelten Echtheitsklasse in einen der jeweiligen Echtheitsklasse zugeordneten Ausgabeabschnitt transportiert wird.

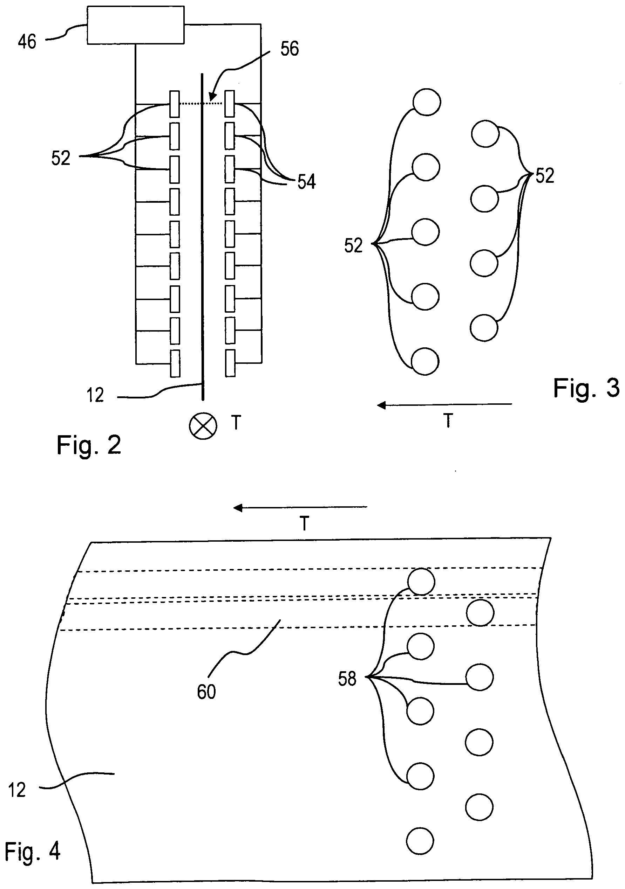

Zur Ermittlung einer Echtheitsklasse auf der Basis von Ultraschalleigenschaften dient der Transmissionsultraschallsensor 44, der im Beispiel folgender maßen aufgebaut ist (vgl. Fig. 2 und 3).

Der Sensor 44 verfügt über mehrere, sowohl quer zu einer Transportrichtung T der Wertdokumente 12 als auch längs zu dieser im wesentlichen in einer Ebene parallel zu einer Richtung entlang des Transportpfads 36 des transportierten Wertdokuments 12 angeordnete, von der Steuer- und Auswerteeinrichtung 46 angesteuerte Ultraschallwandler 52 zur Abgabe von Ultraschallpulsen auf die Banknote. Diese Ultraschallwandler 52 dienen somit als Ultraschallsender.

Den Ultraschallwandlern bzw. -sendern 52 in Bezug auf den Transportpfad 36 gegenüber sind in gleicher Zahl als Ultraschallempfänger dienende Ultraschallwandler 54, die mit der Steuer- und Auswerteeinrichtung 46 über in den Figuren nicht gezeigte Schnittstellen und schematisch gezeigte Signalverbindungen so angeordnet, daß diese von einem entlang des Transportpfads 36 transportierten Wertdokument 12 ausgehenden, durch Beschallung mit Ultraschallpulsen der Ultraschallsender 52 hervorgerufene Ultraschallwellen empfangen können.

Jedem der Ultraschallsender 52 ist dabei einer der Ultraschallempfänger 54 so zugeordnet, daß zwischen diesen eine wenigstens näherungsweise orthogonal zu einem entlang des Transportpfads 36 transportierten Wertdokument 12 verlaufende Ultraschallstrecke 56 ergibt, entlang derer ein von dem jeweiligen Ultraschallsender 52 abgegebener Ultraschallpuls zu dem diesem zugeordneten Ultraschallempfänger 54 läuft Mit jedem Paar von Ultraschallsendern und diesen zugeordneten Ultraschallempfängern bzw. mit jeder Ultraschallstrecke 56 in Verbindung mit der Steuer- und Auswerteeinrichtung 46 ist damit ein Wert für die Ultraschalltransmission des Wertdokuments 12 an dem mit dem Ultraschall beschallten Ort ermittelbar.

Die Ultraschallwandler 52 bzw. 54 sind so ausgebildet, daß sie zur Abgabe bzw. zum Empfang von Ultraschallpulsen mit einer Dauer im Bereich von im Beispiel etwa 30 µs und einer Ultraschallfrequenz, d.h. einem Frequenzmaximum des Spektrums des Ultraschallpulses, von im Beispiel etwa 400 kHz gut geeignet sind. Weiter sind sie so dimensioniert, daß jeweils ein auf einem entlang des Transportpfads 36 transportierten Wertdokument 12 bei Beschallung mit den Ultraschallpulsen beschallter Fleck 58, d.h. Abtastbereich, einen Durchmesser von etwa 2 mm aufweist. Jedem der Abtastbereiche ist als Ort der Mittelpunkt des Abtastbereiches zugeordnet.

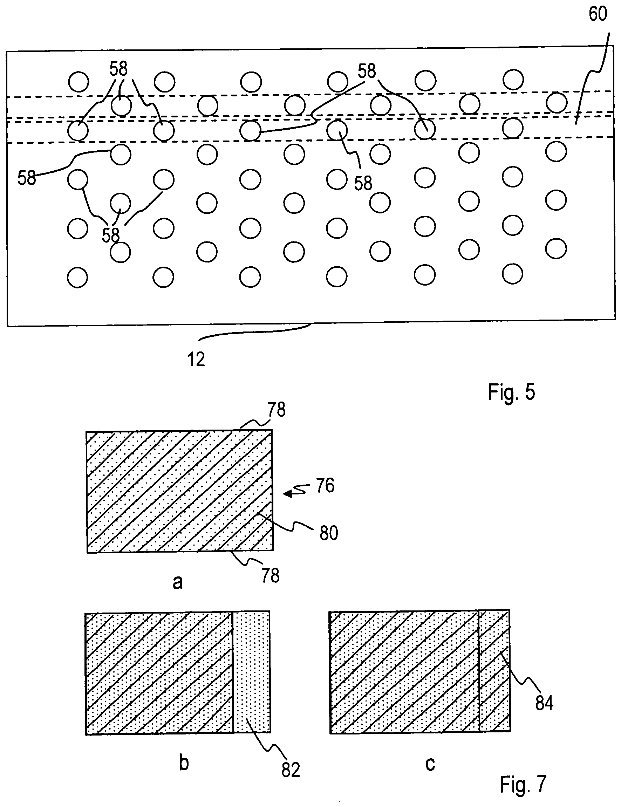

Die Ultraschallsender und -empfänger 52 bzw. 54 sind in einer zu dem Wertdokument 12 in dem Transportpfad 36 parallelen Ebene so angeordnet, daß Werte für die Ultraschalltransmission für sich parallel zu der Transportrichtung T erstreckende streifenförmige Erfassungsbereiche 60 erfaßbar sind, wie in Fig. 4 für eine Momentaufnahme während der Erfassung dargestellt. Insgesamt kann sich damit eine für ein Wertdokument 12 schematisch in Fig. 4 und insbesondere Fig. 5 dargestellte Verteilung von Abtastbereichen 58 bzw. Orten ergeben, für die Transmissionswerte erfaßbar sind, wenn das Wertdokument 12 mit konstanter geeignet vorgegebener Geschwindigkeit durch die Ultraschallstrecken 56 transportiert wird und während des Transports in vorgegebenen Zeitabständen Transmissionswerte erfaßt werden. In diesem Ausführungsbeispiel erfolgt die Ansteuerung unabhängig von dem Eintritt eines Wertdokuments 12 in den Erfassungsbereich des Transmissionsultraschallsensors 44. Zur Unterdrückung eines unerwünschten Empfangs von Ultraschallpulsechos kann der jeweilige Ultraschallempfänger für eine Ultraschallstrecke gegenüber dem Zeitpunkt der Abgabe des Ultraschallpulses durch den Ultraschallsender für die Ultraschallstrecke um etwas weniger als die Pulslaufzeit für die Ultraschallstrecke verzögert eingeschaltet und vor der doppelten Pulslaufzeit seit der Abgabe wieder abgeschaltet werden.

Es ergibt sich so eine regelmäßige Anordnung der Abtastbereiche 58 bzw. Orte auf dem Wertdokument 12, im Beispiel eine im Wesentlichen hexagonale Anordnung. Die Anordnung der Ultraschallsender und -empfänger 52 bzw. 54 ist so gewählt, daß der Abstand aufeinander folgender Orte in wenigstens einem der Streifen bzw. Erfassungsbereiche 60 kleiner als 1 cm, vorzugsweise kleiner als 5 mm ist. Im Beispiel beträgt der Abstand nächstbenachbarter Orte etwa 3 mm, vorzugsweise 2 mm.

Der Sensor 44 verfügt im Ausführungsbeispiel insbesondere über vierundzwanzig Ultraschallsender /-empfänger-Paare bzw. Ultraschallstrecken 56, die so angeordnet sind, daß die Erfassungsbereiche 60 bzw. die Spuren einen Abstand zwischen 3 und 4 mm aufweisen.

Zur Erfassung der Transmissionswerte, d. h. der Transmission, erfaßt die Steuer- und Auswerteeinrichtung 46 in konstanten Zeitabständen die Sensorsignale der Ultraschallempfänger 54, die die Intensität bzw. Leistung einzelner empfangender Ultraschallpulse als Funktion der Zeit und damit wegen der konstanten Transportgeschwindigkeit auch des Ortes wiedergeben. Anhand dieser Signale ermittelt die Steuer- und Auswerteeinrichtung 46 auch das Eintreten eines Wertdokuments in den Erfassungsbereich des Sensors 44. Die Transmissionswerte sind dabei unter der Annahme einer grundsätzlich konstanten Sendeleistung der Ultraschallsender 52 einfach durch die empfangenen Ultraschallpulsenergien gegeben. In anderen Ausführungsbeispielen ist es jedoch auch möglich, die empfangenen Ultraschallpulsenergien durch eine vorgegebene oder gemessene Ultraschallpulsenergie gesendeter Pulse zu dividieren und damit normierte Transmissionswerte zu erhalten.

Die ermittelten Transmissionswerte werden den Orten, für die sie erfaßt wurden, zugeordnet gespeichert. Dies kann beispielsweise in der Art erfolgen, daß für jeden der Erfassungsbereiche 60 getrennt die Transmissionswerte in der zeitlichen Reihenfolge ihrer Erfassung in dem Speicher 50 gespeichert werden. Der Erfassungsbereich 60 entspricht dann einer Koordinate in einer Richtung quer zur Transportrichtung und die Stellung in der Reihe entlang des Erfassungsbereichs 60 einer Koordinate in Transportrichtung T. Ein Index, der die Stellung in der Reihe angibt, stellt dann zusammen mit der Vorschrift für die Umsetzung von Orten in die Reihe die Ortsinformation dar.

Die Frequenz, mit der die Ultraschallpulse nacheinander abgegeben werden, und die Transportgeschwindigkeit der Banknote sind so gewählt, daß entlang der Transportrichtung der Banknote in jedem Erfassungsbereich 60 wenigstens fünf Transmissionswerte erfaßt werden. Im Beispiel werden Transmissionswerte im Abstand von 3 mm, vorzugsweise 2 mm, entlang der Transportrichtung oder fünfzig oder mehr Transmissionswerte erfaßt.

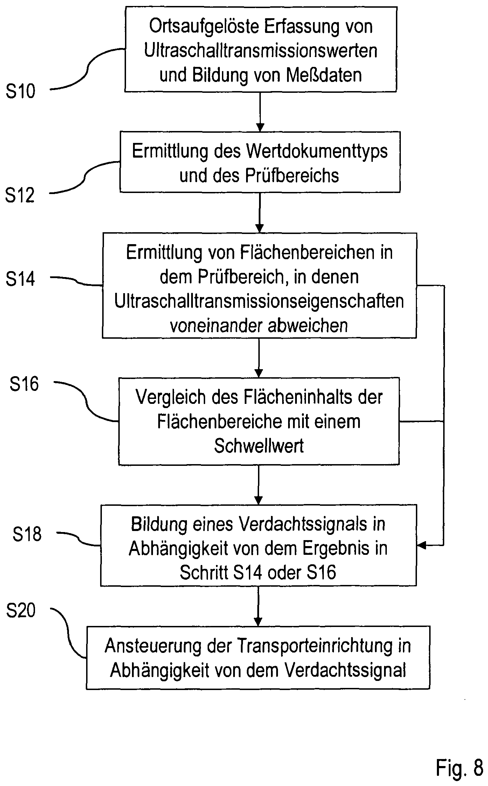

Ausgehend von diesen für ein Wertdokument als Funktion des Ortes vorliegenden Transmissionswerten führt die Steuer- und Auswerteeinrichtung 46, genauer der Prozessor 48 nun bei der Abarbeitung von Programmcode des in dem Speicher 50 gespeicherten Computerprogramms folgendes Verfahren zum Prüfen eines Wertdokuments eines vorgegebenen Typs auf einen Verdacht für das Vorliegen einer Fälschung, insbesondere einer Stückelfälschung, aus. Der erste Schritt S10 wird allerdings teilweise durch den Ultraschallsensor 44 durchgeführt. Das Verfahren ist grob schematisch in Fig. 8 als Ablaufdiagramm veranschaulicht. Gezeigt ist ein Verfahrensabschnitt, der für jedes geprüfte Wertdokument durchlaufen wird.

In Schritt S10 wird mittels des oben beschriebenen Transmissionsultraschallsensors 44 als Ultraschalleigenschaft des Wertdokuments die Ultraschalltransmission ortsaufgelöst unter Bildung von ortsabhängigen Meßdaten erfaßt. Die Meßdaten stellen die Ultraschalltransmission in Abhängigkeit von dem Ort dar. Sie werden in dem Speicher 50 der Steuer- und Auswerteeinrichtung 46 zwischengespeichert.

Im Beispiel sind die Steuer- und Auswerteeinrichtung 46 und das mittels dieser bzw. wenigstens teilweise von dieser ausgeführte Verfahren zur Prüfung von Wertdokumenten von zwei vorgegebenen Wertdokumenttypen ausgelegt (vgl. Fig. 6a und 7a). Wertdokumente der beiden Wertdokumenttypen sind zum einen an Hand ihres in den Figuren nicht gezeigten Druckbildes unterscheidbar. Zum anderen weisen sie unterschiedliche vorgegebene Verläufe der Ultraschalltransmission in vorgegebenen Bereichen auf.

Der erste Wertdokumenttyp 61 in Fig. 6a zeichnet sich dadurch aus, daß die Wertdokumente ein Substrat aus Banknotenpapier aufweisen, das einen Bereich 62 mit einem Wasserzeichen und einen Bereich 64 mit im wesentlichen konstanter Ultraschalltransmission aufweist. Der vorgegebene erste Verlauf der Ultraschalleigenschaft, d. h. hier der Ultraschalltransmission, ist in dem Bereich 64 also ortsunabhängig. Dieser Bereich 64 kann als in den Figuren punktiert dargestellter Prüfbereich 64 für den ersten Wertdokumenttyp verwendet werden. Daten zur Festlegung dieses Bereichs relativ zu dem umlaufenden Rand 66 des Wertdokuments sind in der Steuer- und Auswerteeinrichtung 46 gespeichert. Dort können auch Daten gespeichert sein, aus denen die Ultraschalltransmission oder ein Mittelwert von Meßwerten für diese in dem Prüfbereich 64 ermittelbar sind. Diese Daten können beispielweise durch Untersuchung von Referenzwertdokumenten des vorgegebenen Typs ermittelt werden.

Die Figuren 6b bis d zeigen schematisch Beispiele für Stückelfälschungen. Bei der Stückelfälschung in Fig. 6b ist in den Bereich 64 ein Loch gestanzt, das durch Papier 68 ersetzt ist, das ein anderes Flächengewicht aufweist als das Substrat des Wertdokuments im Bereich 64. Im Beispiel ist es etwa 10 g/m² schwerer.

Die Figuren 6c und 6d zeigen Stückelfälschungen, bei denen in dem Prüfbereich 64 liegende Endabschnitte des Wertdokuments durch Blattbereiche 72 bzw. 74 ersetzt sind, die ein anderes Flächengewicht aufweisen, als der Bereich 64.

Der zweite Wertdokumenttyp 76 in Fig. 7a weist über seine gesamte Fläche ein in den Figuren 7 durch Schraffur gekennzeichnetes Balkenwasserzeichen, dessen Balken, d.h. dickere Bereiche, in einem vorgegebenen Winkel geneigt zu den Rändern 78 des Wertdokuments verlaufen. Der vorgegebene Verlauf der Ultraschalleigenschaft, d. h. hier der Ultraschalltransmission, entspricht \ dem Dickenverlauf über die Fläche des Wertdokuments bzw. einem mittels des Ultraschallsensors 44 für das Wertdokument erfaßten Verlauf der durch die Meßdaten gegebenen Meßwerte. Für den zweiten Wertdokumenttyp kann als - wiederum punktiert dargestellter - Prüfbereich 80 das gesamte Wertdokument verwendet werden. Daten, mittels derer der vorgegebene Verlauf ermittelbar ist, sind in der Steuer- und Auswerteeinrichtung 46 gespeichert.

In den Figuren 7b und 7c sind zwei Beispiele für Stückelfälschungen dargestellt. In dem Beispiel in Fig. 7b ist ein Abschnitt durch einen Blattabschnitt 82 ohne Wasserzeichen ersetzt, in Fig. 7c durch einen Abschnitt 84 mit einem Wasserzeichen, das jedoch gegenüber dem Wasserzeichen des echten Wertdokuments versetzt ist.

In den Schritten S12 bis S16 prüft die Steuer- und Auswerteeinrichtung 46 unter Verwendung der ortsabhängigen Meßdaten, ob in einem vorgegebenen Prüfbereich des Wertdokuments zwei Flächenbereiche vorhanden sind, so daß die wenigstens eine Ultraschalleigenschaft an Orten in einem ersten der beiden Flächenbereiche einen vorgegebenen ersten Verlauf aufweist und die wenigstens eine Ultraschalleigenschaft in dem ersten Flächenbereich und die wenigstens eine Ultraschalleigenschaft in dem anderen Flächenbereich gemäß einem vorgegebenen Unterschiedskriterium voneinander abweichen.

Genauer ermittelt die Steuer- und Auswerteeinrichtung 46 in Schritt S12 beispielsweise in Abhängigkeit von Meßdaten, die von dem Remissionssensor 40 erfaßt werden, den Typ des Wertdokuments, hier also die Währung und Stückelung des Wertdokuments, sowie dessen Lage. Verfahren hierzu sind dem Fachmann bekannt. Die Steuer- und Auswerteeinrichtung ermittelt in Abhängigkeit von dem Wertdokumenttyp und je nach der ermittelten Lage des Wertdokuments dann den dem jeweiligen Wertdokumenttyp zugeordneten Prüfbereich, in dem die Orte der zur weiteren Prüfung herangezogenen Meßdaten bzw. Ultraschalltransmissionsmeßwerte liegen müssen. Im Beispiel ermittelt sie also für ein Wertdokument des ersten Wertdokumenttyps den Prüfbereich 64 und für ein Wertdokument des zweiten Wertdokumenttyps das gesamte Wertdokument.

In den folgenden Schritten S14 und S16 prüft die Steuer- und Auswerteeinrichtung 46 unter Verwendung der ortsabhängigen Meßdaten, ob in dem für den Wertdokumenttyp vorgegebenen Prüfbereich des Wertdokuments zwei Flächenbereiche vorhanden sind, so daß in einem ersten der Flächenbereiche die Ultraschalleigenschaft, d. h. hier die Ultraschalltransmission, an Orten in einem ersten der beiden Flächenbereiche einen vorgegebenen ersten Verlauf aufweist.

Im Fall des ersten Wertdokumenttyps ermittelt die Steuer- und Auswerteeinrichtung 46 spurweise Abschnitte des Wertdokuments, in denen die Ultraschalltransmission gemäß einem vorgegebenen Kriterium konstant bzw. ortsunabhängig ist. Dazu ermittelt sie für verschiedene zusammenhängende Abschnitte entlang einer Spur die Mittelwerte über die Meßwerte und den Betrag der Abweichungen der Meßwerte von dem Mittelwert. Ist der Betrag der Abweichungen kleiner als ein in Abhängigkeit von dem Ultraschallsensor 44 und dem Wertdokumenttyp vorgegebener Grenzwert, werden die Variationen der Meßwerte als zufällige Schwankungen der Meßwerte aufgrund von Rauschen und herstellungsbedingten Schwankungen des Wertdokuments angesehen, und die Meßwerte werden als ortsunabhängig angesehen. Sobald ein Meßwert auftritt, dessen Abweichung größer ist, wird dieser nicht mehr zu einem Abschnitt von Meßwerten gleicher Größe gezählt. Durch Vergleich der Spuren kann so der erste Flächenbereich erhalten werden, der sich dadurch ergibt, daß unmittelbar benachbarte Abschnitte benachbarter Spuren mit als gleich eingestuften Meßwerten als erster Flächenbereich festgelegt werden.

Die verbleibenden Abschnitte, die unmittelbar benachbart sind, bilden, je nach Lage, einen oder mehrere zweite Flächenbereiche mit abweichenden Ultraschalleigenschaften. Im vorliegenden Beispiel wird als Unterschiedskriterium in Bezug auf den ersten Wertdokumenttyp als Teilkriterium verwendet, ob für den zweiten Flächenbereich oder jeden der zweiten Flächenbereiche der Mittelwert über die Meßwerte für den jeweiligen Flächenbereich von dem Mittelwert über die Meßwerte für den ersten Flächenabschnitt größer als Wert ist, der einem Unterschied in den Flächengewichten von Wertdokumenten von mehr 5 g/m² entspricht.

Für den zweiten Wertdokumenttyp werden die Meßwerte daraufhin überprüft, in welchen Bereichen sie den durch das Wasserzeichen gegebenen vorgegebenen ersten Verlauf bzw. das durch das Wasserzeichen gegebene Muster aufweisen. Ein Bereich, in dem dies der Fall ist, bildet den ersten Flächenbereich. Die verbleibenden Flächenbereiche, die sich von dem vorgegebenen Muster, dadurch unterscheiden, daß sie keine systematische Variation oder keine Fortsetzung des Musters von dem ersten Flächenbereich aufweisen, bilden den zweiten bzw. die zweiten Flächenbereiche.

Das Unterscheidungskriterium in Bezug auf den zweiten Wertdokumenttyp umfaßt das Teilkriterium, ob in dem jeweiligen zweiten Flächenbereich kein Muster (vgl. Fig. 7b) oder ein anderes Muster vorliegt, oder das Muster gegenüber dem Muster in dem ersten Flächenbereich versetzt (vgl. Fig. 7c) und/oder gedreht ist.

Werden für den jeweiligen Wertdokumenttyp keine zwei Flächenbereiche gefunden, die sich gemäß dem Teilkriterium unterscheiden, wird dies als Hinweis darauf verstanden, daß eine Stückelfälschung nicht erkannt werden konnte. Das Verfahren wird dann mit Schritt S18 fortgesetzt, in dem ein Verdachtsignal gebildet wird, das anzeigt, daß kein Fälschungsverdacht vorliegt, und ein entsprechendes Datum wird in der Steuer- und Auswerteeinrichtung gespeichert.

Ergibt die Prüfung in Schritt S14, daß zwei Flächenbereiche mit den genannten Eigenschaften gefunden wurden, wird in dem Schritt S16, der in anderen Ausführungsbeispielen entfallen kann, zusätzlich das weitere Teilkriterium geprüft, ob die Flächeninhalte der gefundenen Flächenbereiche einen vorgegebenen Mindestflächeninhalt von im Beispiel 1cm² übersteigen. Ist dies nicht der Fall, wird nicht von dem Vorliegen einer Stückelfälschung ausgegangen und es wird unmittelbar danach Schritt S18 wie oben geschildert ausgeführt.

Ein weiteres Ausführungsbeispiel unterscheidet sich von dem ersten Ausführungsbeispiel nur dadurch, daß der Schritt S16 durch einen Schritt S16' ersetzt ist.

In Schritt S16' wird ein anderes Teilkriterium geprüft. Genauer werden bei der Prüfung, ob die zwei Flächenbereiche vorhanden sind, nur Flächenbereiche berücksichtigt, die durch wenigstens zwei Abschnitte des Randes begrenzt sind, die nicht kollinear sind. Dies erfolgt im vorliegenden Beispiel dadurch, daß in Schritt S18 zunächst geprüft wird, ob sich die beiden Flächenbereiche bis zu Abschnitten des umlaufenden Randes des Wertdokuments erstrecken, wie dies beispielsweise in den Fällen der Figuren 6b und 6c sowie 7b der Fall ist. Dann wird geprüft, ob die Abschnitte nicht kollinear sind, was im vorliegenden Beispiel dadurch geschieht, daß geprüft wird, ob einer der Abschnitte in der Längsrichtung und einer in der Querrichtung des Wertdokuments verläuft oder ob sich die Abschnitte gegenüberliegen. Nur wenn dies der Fall ist, wird von dem Vorliegen einer Stückelungsfälschung ausgegangen und in Schritt S18 ein entsprechendes Echtheitssignal gebildet

In dem folgenden Schritt S20 steuert die Steuer- und Auswerteeinrichtung 46 in Abhängigkeit von dem Echtheitssignal und entsprechenden Signalen, die auf der Basis der anderen Sensoren ermittelt wurden, die Transporteinrichtung so an, daß das Wertdokument in ein entsprechendes Ausgabefach transportiert wird.

Weitere Ausführungsbeispiele unterscheiden sich von den zuvor beschriebenen Ausführungsbeispielen allein dadurch, daß bei der Untersuchung des ersten Wertdokumenttyps eine Mittelung der Ultraschalltransmission bzw. der dies darstellenden Meßwerte nicht über benachbarte Orte in derselben Spur, sondern über die nächsten Nachbarorte eines gegebenen Ortes erfolgt.

Andere Ausführungsbeispiele unterscheiden sich von den beschriebenen Ausführungsbeispielen dadurch, daß zum Ermitteln der wenigstens einen Ultraschalleigenschaft Ultraschall auf das Wertdokument abgegeben und der von dem Wertdokument remittierte Ultraschall erfaßt wird. Die geschilderten Verfahrensschritte werden dann entsprechend ausgeführt.

Eine andere bevorzugte Ausführungsform unterscheidet sich von dem ersten Ausführungsbeispiel dadurch, daß die Ultraschallwandler so ausgebildet sind, daß sie zur Abgabe bzw. zum Empfang von Ultraschallpulsen mit einer Dauer im Bereich von etwa 45 µs und einer Ultraschallfrequenz, d.h. einem Frequenzmaximum des Spektrums des Ultraschallpulses, von etwa 300 kHz gut geeignet sind. Weiter sind sie so dimensioniert, daß ein auf einer entlang des Transportpfads 22 transportierten Banknote bei Beschallung mit den Ultraschallpulsen beschallter Fleck einen Durchmesser von etwa 3 mm aufweist.

Bei anderen Ausführungsformen können die Ultraschallstrecken gegenüber der Ebene der zu untersuchenden Banknote auch geneigt sein, um bei der Verwendung von Ultraschallpulsen den Einfluß von Echos zu vermeiden.

Weiter kann der Ultraschall statt in Pulsen auch kontinuierlich abgegeben werden. In diesem Fall sind die Ultraschallstrecken gegenüber der zu untersuchenden Banknote vorzugsweise ebenfalls geneigt, um das Auftreten von stehenden Wellen zu vermeiden.

Darüber hinaus können sich andere Ausführungsbeispiele von den zuvor beschriebenen dadurch unterscheiden, daß die Ultraschallwandler entlang einer quer zur Transportrichtung verlaufenden Zeile abgeordnet sind.

Die beschriebenen Ausführungsbeispiele sind insbesondere geeignet zur Prüfung von Wertdokumente eines Systems von Wertdokumenten, das wenigstens zwei verschiedene Wertdokumenttypen umfaßt, die jeweils durch ein für den jeweiligen Wertdokumenttyp spezifisches Trägermaterial, vorzugsweise Banknotenpapier und/oder Kunststofffoliensubstrate für Banknoten und/oder Verbundmaterialien aus Papier und Folien, mit einem für den jeweiligen Wertdokumenttyp spezifischen Flächengewicht aufweisen, wobei sich die Flächengewichte für wenigstens verschiedene Wertdokumenttypen unterscheiden. Beispielsweise könnte, in einer vorgegebenen Währung, eine Banknote mit einem Wert von 10 im Prüfbereich ein Flächengewicht von 65 g/m², eine Banknote mit einem Wert von 20 im Prüfbereich ein Flächengewicht von 75 g/m², und eine Banknote mit einem Wert von 50 im Prüfbereich ein Flächengewicht von 85 g/m² aufweisen.

## Patentansprüche

1. Verfahren zum Prüfen eines Wertdokuments (12) eines vorgegebenen Typs auf einen Verdacht für das Vorliegen einer Fälschung, insbesondere einer Stückelfälschung,
- bei dem wenigstens eine Ultraschalleigenschaft des Wertdokuments (12) ortsaufgelöst unter Bildung von ortsabhängigen Meßdaten erfaßt wird,
- bei dem unter Verwendung der ortsabhängigen Meßdaten geprüft wird, ob in einem vorgegebenen Prüfbereich (64; 80) des Wertdokuments (12) zwei Flächenbereiche (62, 64; 64; 68; 72,74) vorhanden sind, so daß die wenigstens eine Ultraschalleigenschaft an Orten (58) in einem ersten der beiden Flächenbereiche (62, 64; 64, 68; 72,74) einen vorgegebenen ersten Verlauf aufweist und die wenigstens eine Ultraschalleigenschaft in dem ersten Flächenbereich (62, 64; 64, 68; 72,74) und die wenigstens eine Ultraschalleigenschaft in dem anderen Flächenbereich (62, 64; 64, 68; 72,74) gemäß einem vorgegebenen Unterschiedskriterium voneinander abweichen,
- bei dem bei dem Prüfen, ob in dem vorgegebenen Prüfbereich (64; 80) des Wertdokuments (12) die zwei Flächenbereiche (62, 64; 64, 68; 72,74) vorhanden sind, Mittelwerte über die Meßdaten über wenigstens drei benachbarte Orte(58) gebildet und zur Ermittlung des Verlaufs in dem ersten Flächenbereich (62, 64; 64, 68; 72,74) und/oder bei der Prüfung des Unterscheidungskriteriums verwendet werden und/oder bei dem bei dem Prüfen, ob die zwei Flächenbereiche (62, 64; 64, 68; 72,74) vorhanden sind, nur Flächenbereiche berücksichtigt werden, deren Flächeninhalte einen für den vorgegebenen Typ vorgegebenen Mindestflächeninhalt übersteigen, und
- bei dem ein Echtheitssignal gebildet wird, das das Ergebnis der Prüfung wiedergibt und einem Hinweis auf eine Stückelfälschung entspricht, wenn das Unterscheidungskriterium erfüllt ist.

2. Verfahren nach Anspruch 1, bei dem zum Ermitteln der wenigstens einen Ultraschalleigenschaft Ultraschall auf das Wertdokument (12) abgegeben und der von dem Wertdokument (12) transmittierte Ultraschall erfaßt wird.

3. Verfahren nach einem der vorhergehenden Ansprüche, bei dem der erste vorgegebene Verlauf derart ist, daß in dem ersten Flächenbereich (62, 64; 64, 68; 72,74) gemäß einem vorgegebenen Kriterium die wenigstens eine Ultraschalleigenschaft ortsunabhängig ist bzw. daß die die wenigstens einen Ultraschalleigenschaft darstellenden Meßwerte in den Meßdaten ortsunabhängig sind, und bei dem das Unterschiedskriterium vorzugsweise das Teilkriterium enthält, ob sich den Meßdaten entsprechende Flächengewichte der Flächenbereiche (62, 64; 64, 68; 72,74) oder durch die Meßdaten dargestellte Flächengewichte um wenigstens 5g/m² unterscheiden.

4. Verfahren nach einem der vorhergehenden Ansprüche, bei dem der erste vorgegebene Verlauf ein für den Typ des Wertdokuments (12) vorgegebenes örtliches Muster der wenigstens einen Ultraschalleigenschaft darstellt, und das Unterschiedskriterium das Teilkriterium enthält, ob die Meßdaten für den anderen der Flächenbereiche (62, 64; 64, 68; 72,74) ein abweichendes oder kein örtliches Muster der wenigstens einen Ultraschalleigenschaft darstellen.

5. Verfahren nach einem der vorhergehenden Ansprüche, bei dem das Wertdokument (12) einen umlaufenden Rand (66) aufweist, und bei dem bei der Prüfung, ob die zwei Flächenbereiche (62, 64; 64, 68; 72,74) vorhanden sind, nur Flächenbereiche (62, 64; 64, 68; 72,74) berücksichtigt werden, die durch wenigstens zwei Abschnitte des Randes (66) begrenzt ist, die nicht kollinear verlaufen.

6. Verfahren nach einem der vorhergehenden Ansprüche, das zum Prüfen von Wertdokumenten (12) wenigstens zweier verschiedener vorgegebener Wertdokumenttypen ausgelegt ist, und bei dem ein Wertdokumenttyp des Wertdokuments (12) ermittelt wird und der Prüfbereich (64; 80) in Abhängigkeit von dem ermittelten Wertdokumenttyp festgelegt wird.

7. Einrichtung zur Prüfung von Wertdokumenten (12) wenigstens eines vorgegebenen Typs, die zur Durchführung eines Verfahrens nach einem der vorhergehenden Ansprüche ausgebildet ist, und insbesondere vorzugsweise mit
- einem Ultraschallsensor (44), der dazu ausgebildet ist, wenigstens eine Ultraschalleigenschaft eines durch einen Erfassungsbereich (60) des Ultraschallsensors (44) hindurchtransportierten Wertdokuments (12) ortsaufgelöst unter Bildung von ortsabhängigen Meßdaten zu erfassen, und
- einer Auswerteeinrichtung (46), die dazu ausgebildet ist, die Meßdaten des Ultraschallsensors (44) zu erfassen und unter Verwendung der ortsabhängigen Meßdaten zu prüfen, ob in einem vorgegebenen Prüfbereich (64; 80) des Wertdokuments zwei Flächenbereiche (62, 64; 64, 68; 72,74) vorhanden sind, so daß die wenigstens eine Ultraschalleigenschaft an Orten (58) in einem ersten der beiden Flächenbereiche (62, 64; 64, 68; 72,74) einen vorgegebenen ersten Verlauf aufweist und die wenigstens eine Ultraschalleigenschaft in dem ersten Flächenbereich (62, 64; 64, 68; 72,74) und die wenigstens eine Ultraschalleigenschaft in dem anderen Flächenbereich (62, 64; 64, 68; 72,74) gemäß einem vorgegebenen Unterschiedskriterium voneinander abweichen, und
ein Echtheitssignal zu bilden, das das Ergebnis der Prüfung wiedergibt und einem Hinweis auf eine Stückelfälschung entspricht, wenn das Unterscheidungskriterium erfüllt ist,
wobei die Auswerteeinrichtung (46) weiter dazu ausgebildet ist, daß bei dem Prüfen, ob in dem vorgegebenen Prüfbereich (64; 80) des Wertdokuments (12) die zwei Flächenbereiche (62, 64; 64, 68; 72,74) vorhanden sind, Mittelwerte über die Meßdaten über wenigstens drei benachbarte Orte (58) gebildet und zur Ermittlung des Verlaufs in dem ersten Flächenbereich (62, 64; 64, 68; 72,74) und/oder bei der Prüfung des Unterscheidungskriteriums verwendet werden und/oder daß bei dem Prüfen, ob die zwei Flächenbereiche (62, 64; 64, 68; 72,74) vorhanden sind, nur Flächenbereiche (62, 64; 64, 68; 72,74) berücksichtigt werden, deren Flächeninhalte einen vorgegebenen Mindestflächeninhalt übersteigen,.

8. Einrichtung nach Anspruch 7, bei der der Ultraschallsensor (44) dazu ausgebildet ist, Ultraschall auf das Wertdokument (12) abzugeben und von dem Wertdokument (12) transmittierten Ultraschall zu erfassen.

9. Einrichtung nach einem der Ansprüche 7 oder 8, bei der die Auswerteeinrichtung (46) so ausgebildet ist, daß der erste vorgegebene Verlauf derart ist, daß in dem ersten Flächenbereich (62, 64; 64, 68; 72,74) gemäß einem vorgegebenen Kriterium die wenigstens eine Ultraschalleigenschaft ortsunabhängig ist bzw. daß die wenigstens einen Ultraschalleigenschaft darstellenden Meßwerte in den Meßdaten ortsunabhängig sind.

10. Einrichtung nach einem der Ansprüche 7 bis 9, bei der die Auswerteeinrichtung (46) so ausgebildet ist, daß das Unterschiedskriterium das Teilkriterium enthält, ob sich den Meßdaten entsprechende Flächengewichte der Flächenbereiche (62, 64; 64, 68; 72,74) um wenigstens 5g/m² unterscheiden.

11. Einrichtung nach einem der Ansprüche 7 bis 10, bei der die Auswerteeinrichtung (46) so ausgebildet ist, daß der erste vorgegebene Verlauf ein für den Typ des Wertdokuments (12) vorgegebenes örtliches Muster der wenigstens einen Ultraschalleigenschaft darstellt, und das Unterschiedskriterium das Teilkriterium enthält, ob die Meßdaten für den anderen der Flächenbereiche (62, 64; 64, 68; 72,74) ein abweichendes oder kein örtliches Muster der wenigstens einen Ultraschalleigenschaft darstellen.

12. Einrichtung nach einem der Ansprüche 7 bis 11, bei der die Auswerteeinrichtung (46) so ausgebildet ist, daß bei der Prüfung, ob die zwei Flächenbereiche (62, 64; 64, 68; 72,74) vorhanden sind, nur Flächenbereiche (62, 64; 64, 68; 72,74) berücksichtigt werden, die durch Abschnitte eines umlaufenden Randes (60) des Wertdokuments begrenzt sind, die nicht kollinear verlaufen.

13. Einrichtung nach einem der Ansprüche 7 bis 12, die zur Prüfung von Wertdokumenten (12) wenigstens zweier verschiedener vorgegebener Wertdokumenttypen eingerichtet ist, und bei der die Auswerteeinrichtung (46) so ausgebildet ist, daß der Prüfbereich (64; 80) in Abhängigkeit von einem ermittelten Wertdokumenttyp des Wertdokuments (12) festgelegt wird.

14. Vorrichtung zur Bearbeitung von Wertdokumenten (12) mit
- einer Zuführeinrichtung (14) für zu bearbeitende Wertdokumente (12),
- einer Ausgabeeinrichtung (16) für Wertdokumente (12), wenigstens zwei Ausgabeabschnitte (24, 25, 26) zur Aufnahme bearbeiteter Wertdokumente (12) aufweist,
- einer Transporteinrichtung (18) zum Transportieren von vereinzelten Wertdokumenten (12) von der Zuführeinrichtung entlang eines Transportpfades (36) zu der Ausgabeeinrichtung (16),
- einer Prüfungseinrichtung (44, 46) nach einem der Ansprüche 7 bis 13, die so angeordnet ist, daß der Transportpfad (36) durch deren Erfassungsbereich (60) verläuft, und
- einer Steuereinrichtung (46), die in Abhängigkeit von einem Echtheitssignals der Prüfvorrichtung (44, 46) für ein von der Transporteinrichtung (18) transportiertes Wertdokument (12) die Transporteinrichtung so ansteuert, daß das Wertdokument (12) in einen, dem Echtheitssignal entsprechenden Ausgabeabschnitt (24, 25, 26) der wenigstens zwei Ausgabeabschnitte transportiert wird.

15. Vorrichtung nach Anspruch 14, die einen Sensor (40, 42), der so angeordnet ist, daß er durch den Sensor (40, 42) bestimmte Eigenschaften eines mittels der Transporteinrichtung (18) transportierten Wertdokuments (12) erfassen und diese darstellende Meßdaten bilden kann, und eine Ermittlungseinrichtung, die in Abhängigkeit von den Meßdaten einen Wertdokumenttyp des Wertdokuments (12) ermittelt und ein den Wertdokumenttyp darstellendes Typsignal bildet, aufweist und
bei der die Auswerteeinrichtung (46) der Prüfeinrichtung (44, 46) so ausgebildet ist, daß sie Meßdaten des Ultraschallsensors (44) in Abhängigkeit von dem Typsignal der Ermittlungseinrichtung (46) für Bereiche außerhalb des in Abhängigkeit von dem Wertdokumenttyp des Wertdokuments (12) vorgegebenen Prüfbereichs des Wertdokuments (12) bei der Prüfung nicht berücksichtigt.

## Claims

1. A method for checking a value document (12) of a specified type for the suspected presence of a forgery, in particular of a pieced-together forgery,
- wherein at least one ultrasonic property of the value document (12) is captured in a spatially resolved manner so as to form location-dependent measuring data,
- wherein while employing the location-dependent measuring data it is checked whether two areal regions (62, 64; 64; 68; 72, 74) are present in a specified checking region (64; 80) of the value document (12), so that the at least one ultrasonic property has a specified first course at locations (58) in a first one of the two areal regions (62, 64; 64, 68; 72, 74), and the at least one ultrasonic property in the first areal region (62, 64; 64, 68; 72, 74) and the at least one ultrasonic property in the other areal region (62, 64; 64, 68; 72, 74) deviate from each other according to a specified difference criterion,
- when checking whether the two areal regions (62, 64; 64, 68; 72, 74) are present in the specified checking region (64; 80) of the value document (12), averages over the measuring data over at least three neighboring locations (58) are formed and employed for establishing the course in the first areal region (62, 64; 64, 68; 72, 74) and/or when checking the distinguishing criterion and/or when checking whether the two areal regions are present, only those areal regions (62, 64; 64, 68; 72, 74) are taken into consideration whose surface areas exceed a specified minimum surface area, and
- wherein there is formed an authenticity signal which represents the result of the check and corresponds to an indication of a pieced-together forgery, when the distinguishing criterion is satisfied.

2. The method according to claim 1, wherein, for establishing the at least one ultrasonic property, ultrasound is emitted onto the value document (12) and the ultrasound transmitted by the value document (12) is captured.

3. The method according to any of the preceding claims, wherein the first specified course is such that in the first areal region (62, 64; 64, 68; 72, 74) according to a specified criterion the at least one ultrasonic property is location-independent, or that the measurement values representing the at least one ultrasonic property in the measuring data are location-independent, and wherein the difference criterion preferably contains the subcriterion of whether the areal regions' (62, 64; 64, 68; 72, 74) weights per unit area corresponding to the measuring data, or weights per unit area represented by the measuring data, differ by at least 5 g/m².

4. The method according to any of the preceding claims, wherein the first specified course represents a local pattern of the at least one ultrasonic property, said pattern being specified for the type of the value document (12), and the difference criterion contains the subcriterion of whether the measuring data for the other one of the areal regions (62, 64; 64, 68; 72, 74) represent a deviating, or no, local pattern of the at least one ultrasonic property.

5. The method according to any of the preceding claims, wherein the value document (12) has a circumferential edge (66), and wherein, when checking whether the two areal regions (62, 64; 64, 68; 72, 74) are present, only those areal regions (62, 64; 64, 68; 72, 74) are taken into consideration that are limited by at least two portions of the edge (66) that do not extend collinearly.

6. The method according to any of the preceding claims, which is designed for checking value documents (12) of at least two different specified value-document types, and wherein a value-document type of the value document (12) is established, and the checking region (64; 80) is fixed in dependence on the established value-document type.

7. A device for checking value documents (12) at least of one specified type which is configured for carrying out a method according to any of the preceding claims, and in particular preferably having
- an ultrasonic sensor (44) which is configured for capturing in a spatially resolved manner at least one ultrasonic property of a value document (12) transported through a capture region (44) of the ultrasonic sensor (60) so as to form location-dependent measuring data, and
- an evaluation device (46) which is configured for capturing the measuring data of the ultrasonic sensor (44) and checking while employing the location-dependent measuring data whether two areal regions (62, 64; 64, 68; 72, 74) are present in a specified checking region (64; 80) of the value document, so that the at least one ultrasonic property has a specified first course at locations (58) in a first one of the two areal regions (62, 64; 64, 68; 72, 74), and the at least one ultrasonic property in the first areal region (62, 64; 64, 68; 72, 74) and the at least one ultrasonic property in the other areal region (62, 64; 64, 68; 72, 74) deviate from each other according to a specified difference criterion, forming an authenticity signal which represents the result of the check and corresponds to an indication of a pieced-together forgery, when the distinguishing criterion is satisfied,
wherein the evaluation device (46) is further configured such that, when checking whether the two areal regions (62, 64; 64, 68; 72, 74) are present in the specified checking region (64; 80) of the value document (12), averages over the measuring data over at least three neighboring locations (58) are formed and employed for establishing the course in the first areal region (62, 64; 64, 68; 72, 74) and/or when checking the distinguishing criterion and/or that when checking whether the two areal regions (62, 64; 64, 68; 72, 74) are present, only those areal regions (62, 64; 64, 68; 72, 74) are taken into consideration whose surface areas exceed a specified minimum surface area.

8. The device according to claim 7, wherein the ultrasonic sensor (44) is configured for emitting ultrasound onto the value document (12) and capturing ultrasound transmitted by the value document (12).

9. The device according to any of claims 7 to 8, wherein the evaluation device (46) is so configured that the first specified course is such that in the first areal region (62, 64; 64, 68; 72, 74) according to a specified criterion the at least one ultrasonic property is location-independent, or that measurement values representing the at least one ultrasonic property in the measuring data are location-independent.

10. The device according to any of claims 7 to 9, wherein the evaluation device (46) is so configured that the difference criterion contains the subcriterion of whether the areal regions' (62, 64; 64, 68; 72, 74) weights per unit area corresponding to the measuring data differ by at least 5 g/m².

11. The device according to any of claims 7 to 10, wherein the evaluation device (46) is so configured that the first specified course represents a local pattern of the at least one ultrasonic property, said pattern being specified for the type of the value document (12), and the difference criterion contains the subcriterion of whether the measuring data for the other one of the areal regions (62, 64; 64, 68; 72, 74) represent a deviating, or no, local pattern of the at least one ultrasonic property.

12. The device according to any of claims 7 to 11, wherein the evaluation device (46) is so configured that, when checking whether the two areal regions (62, 64; 64, 68; 72, 74) are present, only those areal regions (62, 64; 64, 68; 72, 74) are taken into consideration that are limited by portions of a circumferential edge (60) of the value document that extend collinearly.

13. The device according to any of claims 7 to 12, which is adapted for checking value documents (12) of at least two different specified value-document types, and wherein the evaluation device (46) is so configured that the checking region (64; 80) is fixed in dependence on an established value-document type of the value document (12).

14. An apparatus for processing value documents (12) having
- a feeding device (14) for value documents (12) to be processed,
- an output device (16) for value documents (12), which has at least two output portions (24, 25, 26) for receiving processed value documents (12),
- a transport device (18) for transporting singled value documents (12) from the feeding device along a transport path (36) to the output device (16),
- a checking device (44, 46) according to any of claims 7 to 13 which is so disposed that the transport path (36) extends through its capture region (60), and
- a control device (46) which so actuates the transport device in dependence on an authenticity signal of the checking apparatus (44, 46) for a value document (12) transported by the transport device (18) that the value document (12) is transported into an output portion of two output portions (24, 25, 26) that corresponds to the authenticity signal.

15. The apparatus according to claim 14, which has a sensor (40,42) which is so disposed that it can capture properties of a value document (12) transported by means of the transport device (18), said properties being determined by the sensor (40,42), and can form measuring data representing them, and an establishing device which establishes a value-document type of the value document (12) in dependence on the measuring data and forms a type signal representing the value-document type, and wherein the evaluation device (46) of the checking device (44, 46) is so configured that upon the check it does not take into consideration measuring data of the ultrasonic sensor (44) in dependence on the type signal of the establishing device (46) for regions outside the value document's (12) checking region specified in dependence on the value-document type of the value document (12).

## Revendications

1. Procédé d'examen d'un document de valeur (12) d'un type prédéterminé afin d'éclaircir un soupçon quant à la présence d'une falsification, en particulier d'une falsification par fragments
- dans lequel au moins une propriété ultrasonique du document de valeur (12) est saisie en résolution locale en constituant des données de mesure dépendantes de la localisation,
- dans lequel, en utilisant les données de mesure dépendantes de la localisation, il est examiné si, dans une zone d'examen (64; 80) prédéterminée du document de valeur (12), il y a de telle manière deux zones de surface (62, 64; 64; 68; 72,74) que la au moins une propriété ultrasonique présente, à des endroits (58) situés dans une première des deux zones de surface (62, 64; 64, 68; 72, 74), une première courbe prédéterminée, et que la au moins une propriété ultrasonique dans la première zone de surface (62, 64; 64, 68; 72,74) et la au moins une propriété ultrasonique dans l'autre zone de surface (62, 64; 64, 68; 72,74) divergent entre elles suivant un critère de distinction prédéterminé,
- dans lequel, lors de l'examen scrutant si, dans la zone d'examen (64; 80) prédéterminée du document de valeur (12), il y a les deux zones de surface (62, 64; 64, 68; 72,74), des valeurs moyennes sur les données de mesure sur au moins trois endroits (58) adjacents sont constituées et utilisées pour la détermination de la courbe dans la première zone de surface (62, 64; 64, 68; 72,74) et/ou lors de l'examen du critère de distinction, et/ou dans lequel, lors de l'examen scrutant s'il y a les deux zones de surface (62, 64; 64, 68; 72,74), uniquement des zones de surface dont les aires surfaciques dépassent une aire surfacique minimum prédéterminée pour le type prédéterminé sont prises en compte, et
- dans lequel un signal d'authenticité reproduisant le résultat de l'examen et correspondant à une indication d'une falsification par fragments est constitué quand le critère de distinction est rempli.

2. Procédé selon la revendication 1, dans lequel, pour la détermination de la au moins une propriété ultrasonique, des ultrasons sont émis sur le document de valeur (12), et les ultrasons transmis par le document de valeur (12) sont saisis.

3. Procédé selon une des revendications précédentes, dans lequel la première courbe prédéterminée est telle que, dans la première zone de surface (62, 64; 64, 68; 72,74), suivant un critère prédéterminé, la au moins une propriété ultrasonique est indépendante de la localisation, ou que les valeurs de mesure représentant la au moins une propriété ultrasonique sont, dans les données de mesure, indépendantes de la localisation, et dans lequel le critère de distinction contient de préférence le critère partiel portant sur si des grammages, correspondant aux données de mesure, des zones de surface (62, 64; 64, 68; 72,74), ou des grammages représentés par les données de mesure se différencient d'au moins 5g/m².

4. Procédé selon une des revendications précédentes, dans lequel la première courbe prédéterminée représente un modèle local, de la au moins une propriété ultrasonique, prédéterminé pour le type du document de valeur (12), et que le critère de distinction contient le critère partiel portant sur si les données de mesure pour l'autre des zones de surface (62, 64; 64, 68; 72,74) représentent un modèle local divergeant ou pas de modèle local de la au moins une propriété ultrasonique.

5. Procédé selon une des revendications précédentes, dans lequel le document de valeur (12) a une bordure (66) sur tout son pourtour, et dans lequel, lors de l'examen scrutant s'il y a les deux zones de surface (62, 64; 64, 68; 72,74), uniquement des zones de surface (62, 64; 64, 68; 72,74) limitées par au moins deux sections non-colinéaires de la bordure (66) sont prises en compte.

6. Procédé selon une des revendications précédentes, lequel est adapté pour l'examen de documents de valeur (12) d'au moins deux types prédéterminés différents de document de valeur, et dans lequel un type de document de valeur du document de valeur (12) est déterminé et la zone d'examen (64; 80) est définie en fonction du type de document de valeur déterminé.

7. Dispositif d'examen de documents de valeur (12) d'au moins un type prédéterminé, lequel est réalisé pour l'exécution d'un procédé selon une des revendications précédentes, et en particulier de préférence comprenant
- un capteur ultrasonique (44) réalisé pour saisir en résolution locale, en constituant des données de mesure dépendantes de la localisation, au moins une propriété ultrasonique d'un document de valeur (12) transporté à travers la zone de saisie (60) du capteur ultrasonique (44), et
- un dispositif d'évaluation (46) réalisé pour saisir les données de mesure du capteur ultrasonique (44) et pour, en utilisant les données de mesure dépendantes de la localisation, examiner si, dans une zone d'examen (64; 80) prédéterminée du document de valeur, il y a de telle manière deux zones de surface (62, 64; 64, 68; 72,74) que la au moins une propriété ultrasonique présente, à des endroits (58) situés dans une première des deux zones de surface (62, 64; 64, 68; 72,74), une première courbe prédéterminée, et que la au moins une propriété ultrasonique dans la première zone de surface (62, 64; 64, 68; 72,74) et la au moins une propriété ultrasonique dans l'autre zone de surface (62, 64; 64, 68; 72,74) divergent entre elles suivant un critère de distinction prédéterminé, et
pour constituer un signal d'authenticité reproduisant le résultat de l'examen et correspondant à une indication d'une falsification par fragments quand le critère de distinction est rempli,
cependant que le dispositif d'évaluation (46) est en outre réalisé pour que, lors de l'examen scrutant si, dans la zone d'examen (64; 80) prédéterminée du document de valeur (12), il y a les deux zones de surface (62, 64; 64, 68; 72,74), des valeurs moyennes sur les données de mesure sur au moins trois endroits (58) adjacents soient constituées et utilisées pour la détermination de la courbe dans la première zone de surface (62, 64; 64, 68; 72,74) et/ou lors de l'examen du critère de distinction, et/ou pour que, lors de l'examen scrutant s'il y a les deux zones de surface (62, 64; 64, 68; 72,74), uniquement des zones de surface (62, 64; 64, 68; 72,74) dont les aires surfaciques dépassent une aire surfacique minimum prédéterminée soient prises en compte.

8. Dispositif selon la revendication 7, dans lequel le capteur ultrasonique (44) est réalisé pour émettre des ultrasons sur le document de valeur (12) et pour saisir des ultrasons transmis par le document de valeur (12).

9. Dispositif selon une des revendications de 7 à 8, dans lequel le dispositif d'évaluation (46) est réalisé de telle manière que la première courbe prédéterminée est telle que, dans la première zone de surface (62, 64; 64, 68; 72,74), suivant un critère prédéterminé, la au moins une propriété ultrasonique est indépendante de la localisation, ou que les valeurs de mesure représentant la au moins une propriété ultrasonique sont, dans les données de mesure, indépendantes de la localisation.

10. Dispositif selon une des revendications de 7 à 9, dans lequel le dispositif d'évaluation (46) est réalisé de telle manière que le critère de distinction contient le critère partiel portant sur si des grammages, correspondant aux données de mesure, des zones de surface (62, 64; 64, 68; 72,74), se différencient d'au moins 5g/m².

11. Dispositif selon une des revendications de 7 à 10, dans lequel le dispositif d'évaluation (46) est réalisé de telle manière que la première courbe prédéterminée représente un modèle local, de la au moins une propriété ultrasonique, prédéterminé pour le type du document de valeur (12), et que le critère de distinction contient le critère partiel portant sur si les données de mesure pour l'autre des zones de surface (62, 64; 64, 68; 72,74) représentent un modèle local divergeant ou pas de modèle local de la au moins une propriété ultrasonique.

12. Dispositif selon une des revendications de 7 à 11, dans lequel le dispositif d'évaluation (46) est réalisé de telle manière que, lors de l'examen scrutant s'il y a les deux zones de surface (62, 64; 64, 68; 72, 74), uniquement des zones de surface (62, 64; 64, 68; 72,74) limitées par des sections non-colinéaires d'une bordure (60) sur tout le pourtour du document de valeur sont prises en compte.

13. Dispositif selon une des revendications de 7 à 12, lequel est adapté pour l'examen de documents de valeur (12) d'au moins deux types prédéterminés différents de document de valeur, et dans lequel le dispositif d'évaluation (46) est réalisé de telle façon que la zone d'examen (64; 80) est définie en fonction d'un type de document de valeur déterminé du document de valeur (12).

14. Dispositif de traitement de documents de valeur (12) ayant
- un dispositif d'amenée (14) pour des documents de valeur (12) à traiter,
- un dispositif de délivrance (16) pour des documents de valeur (12) doté d'au moins deux sections de délivrance (24, 25, 26) pour la réception de documents de valeur (12) traités,
- un dispositif de transport (18) pour le transport de documents de valeur (12) déliassés, depuis le dispositif d'amenée, le long d'un chemin de transport (36), vers le dispositif de délivrance (16),
- un dispositif d'examen (44, 46) selon une des revendications de 7 à 13, lequel est agencé de telle façon que le chemin de transport (36) passe à travers sa zone de saisie (60),
- un dispositif de commande (46) qui, en fonction d'un signal d'authenticité du dispositif d'examen (44, 46), pour un document de valeur (12) transporté par le dispositif de transport (18), commande le dispositif de transport de telle façon que le document de valeur (12) est transporté dans une section de délivrance (24, 25, 26), des au moins deux sections de délivrance, correspondant au signal d'authenticité.

15. Dispositif selon la revendication 14, laquelle comporte un capteur (40, 42) agencé de telle façon qu'il peut saisir des propriétés, déterminées par le capteur (40, 42), d'un document de valeur (12) transporté au moyen du dispositif de transport (18) et constituer des données de mesure représentant lesdites propriétés, et un dispositif de détermination, lequel, en fonction des données de mesure, détermine un type de document de valeur du document de valeur (12) et constitue un signal de type représentant le type de document de valeur, et
dans lequel le dispositif d'évaluation (46) du dispositif d'examen (44, 46) est réalisé de telle façon que, lors de l'examen, pour des zones situées à l'extérieur de la zone d'examen du document de valeur (12) prédéterminée en fonction du type de document de valeur du document de valeur (12), il ne prend pas en compte des données de mesure du capteur ultrasonique (44) dépendantes du type de signal du dispositif d'évaluation (46).
